(19) Europäisches Patentamt
European Patent Office
Office européen des brevets

(11) **EP 3 768 555 B1**

(12) **FASCICULE DE BREVET EUROPEEN**

(45) Date de publication et mention de la délivrance du brevet:
**04.05.2022 Bulletin 2022/18**

(21) Numéro de dépôt: **19710434.2**

(22) Date de dépôt: **19.03.2019**

(51) Classification Internationale des Brevets (IPC):
*B60R 1/00* (2022.01)    *H04N 5/262* (2006.01)
*G06T 5/50* (2006.01)

(52) Classification Coopérative des Brevets (CPC):
**H04N 5/2628; B60R 1/00;** B60R 2300/607

(86) Numéro de dépôt international:
**PCT/EP2019/056810**

(87) Numéro de publication internationale:
**WO 2019/180001 (26.09.2019 Gazette 2019/39)**

(54) **SYSTÈME DE VISION PANORAMIQUE AFFICHÉE SUR UN ÉCRAN PORTRAIT**

PANORAMASICHTSYSTEM MIT ANSICHTSANZEIGE AUF EINEM PORTRAITSCHIRM

PANORAMIC VISION SYSTEM THE VIEW OF WHICH IS DISPLAYED ON A PORTRAIT SCREEN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2018 FR 1852471**

(43) Date de publication de la demande:
**27.01.2021 Bulletin 2021/04**

(73) Titulaire: **Renault s.a.s**
**92100 Boulogne Billancourt (FR)**

(72) Inventeur: **AMBROISE, Stephanie**
**78140 Vélizy-Villacoublay (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**EP-A1- 2 476 587      US-A1- 2011 166 782**
**US-A1- 2015 138 356**

**Description**

**Domaine technique**

La présente invention se rapporte à un système de vision panoramique affichée sur un écran au format portrait, un véhicule automobile équipé d'un tel système et un procédé d'affichage d'une vision panoramique sur un écran au format portrait.

**Etat de la technique**

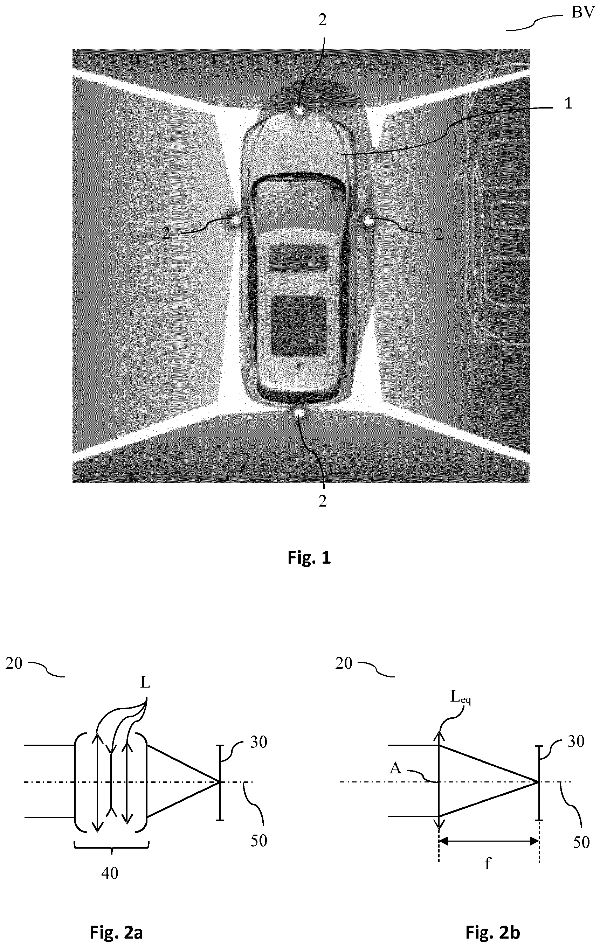

La vision 360° est une prestation recherchée dans le domaine automobile. Elle a notamment ici pour but d'afficher au conducteur sur un écran multimédia une vue de l'environnement proche du véhicule, sous la forme d'une combinaison de deux vues, suivant la vitesse engagée et le choix du conducteur.
Comme illustrée **Figure 1**, la vision 360° nécessite l'implantation de quatre caméras 2 : une à l'avant du véhicule 1, une à l'arrière et une sous chaque rétroviseur extérieur. Elle nécessite également l'utilisation d'un calculateur dédié et d'une liaison vers le système multimédia. Les caméras 2 utilisées sont de type « fisheye » (œil de poisson) ou hypergone, soit d'angle de vue horizontal proche de 180° (voire supérieur).
Les vues disponibles sont par conséquent : une vue avant, une vue arrière, une vue côté conducteur et une vue côté passager. Le regroupement de ces quatre prises de vues permet de procurer une vision du dessus du véhicule dite « bird-view » BV, comme on peut l'illustrer sur la **Figure 1**. US2011/166782 et US2015/138356 se rapportent à cette vision du dessus du véhicule.
Sur les vues natives avant et arrière, il est commun qu'une forte déformation de l'image soit observable en périphérie. Cette forte déformation amène souvent les constructeurs à rogner ces images sur les côtés pour supprimer ces déformations. Une solution pour afficher le champ de vision horizontale des images natives consiste à créer une vue panoramique.
Un second problème réside dans l'affichage d'une vue panoramique sur un écran portrait tel qu'un écran 10 pouces de résolution verticale 1024 pixels et de résolution horizontale 800 pixels. En effet, la largeur en pixel de la vue panoramique est supérieure à la largeur en pixel de l'écran.
Il existe donc un réel besoin d'un système de vision panoramique palliant ces défauts, inconvénients et obstacles de l'art antérieur, en particulier d'un procédé d'affichage d'une telle vision permettant de maximiser le champ de vision, tout en conservant une qualité d'image et de résolution optimale lors de son affichage sur un écran portrait.

**Description de l'invention**

Pour résoudre un ou plusieurs des inconvénients cités précédemment, l'invention propose un système de vision panoramique comprenant :

- trois caméras équipées chacune d'un capteur optique, une caméra centrale dont le champ de vision est adapté pour permettre l'acquisition d'une zone centrale de la vision panoramique, une caméra latérale gauche dont le champ de vision est adapté pour permettre l'acquisition d'une zone latérale gauche de la vision panoramique recouvrant partiellement la zone centrale, et une caméra latérale droite dont le champ de vision est adapté pour permettre l'acquisition d'une zone latérale droite de la vision panoramique recouvrant partiellement la zone centrale de la vision panoramique ;
- une unité de traitement d'image apte à recevoir et traiter les images captées par les trois capteurs optiques ; et
- un écran au format portrait.

Avec cet objectif en vue, le dispositif selon l'invention, par ailleurs conforme au préambule cité ci-avant, est essentiellement caractérisé en ce que, pour afficher la vision panoramique captée par les trois capteurs optiques et traitée par l'unité de traitement, l'écran au format portrait comprend trois zones d'affichage, une zone d'affichage gauche, une zone d'affichage centrale et une zone d'affichage droite ; et l'unité de traitement d'image comprend :

- des moyens de recadrage des images capteurs selon un bandeau horizontal gauche pour les images issues du capteur de la caméra latérale gauche, un bandeau horizontal droit pour les images issues du capteur optique de la caméra latérale droite et selon un bandeau vertical central pour les images issues du capteur optique de la caméra centrale, et
- des moyens de rotation du bandeau horizontal gauche de 90° dans le sens inverse des aiguilles d'une montre et du bandeau horizontal droit de 90° dans le sens des aiguilles d'une montre, et
- des moyens d'agrégation des 3 bandeaux de sorte que la restitution de la vision panoramique sur l'écran soit constituée sur la zone d'affichage gauche du bandeau horizontal gauche tourné de -90°, sur la zone d'affichage centrale centrale du bandeau vertical central et sur la zone d'affichage droite du bandeau horizontal droit tourné de +90°.

Des caractéristiques ou des modes de réalisation particuliers, utilisables seuls ou en combinaison pour ce système de vision panoramique, sont :

l'unité de traitement comprend également des moyens de correction adaptés pour corriger la distorsion générée par les caméras et pour transposer les images corrigées obtenues de chaque capteur avant le recadrage des images capteurs ;

la correction et la transposition des images capteurs se fait :

- par projection des pixels du capteur sur la surface interne d'une demi-sphère de rayon R1 et dont le centre et le sommet sont situés sur un axe optique principal de la caméra, les coordonnées des pixels capteur projetés sur la demi-sphère étant calculées grâce au théorème de Thalès et à l'équation de la sphère ; puis
- par projection des points de la demi-sphère sur la surface interne d'un demi-cylindre vertical de rayon R2 englobant la demi-sphère et dont l'axe de symétrie passe par le centre de la demi-sphère ; et enfin
- par projection des points du demi-cylindre sur un plan tangent au demi-cylindre formant ainsi l'image corrigée à recadrer ;

la correction et la transposition des images capteurs se fait :

- par projection des pixels du capteur sur la surface interne d'une demi-sphère de rayon R1 et dont le centre et le sommet sont situés sur un axe optique principal de la caméra, les coordonnées des pixels capteur projetés sur la demi-sphère étant calculées grâce au théorème de Thalès et à l'équation de la sphère ; puis
- l'image projetée sur la demi-sphère est ensuite projetée sur trois rectangles, un rectangle central, un rectangle droit et un rectangle gauche, ces trois rectangles ayant la même orientation que le capteur et comprenant chacun un axe central vertical et un axe central horizontal, et tels que le rectangle central est parallèle au plan du capteur et situé à une distance $f_2$ du centre de la demi-sphère, l'axe central vertical du rectangle droit est tangent au bord vertical droit du rectangle central, l'axe central vertical du rectangle gauche est tangent au bord vertical gauche du rectangle central, et l'axe central horizontal du rectangle droit présente un angle $\alpha$ par rapport à l'axe central horizontal du rectangle central, et l'axe central horizontal du rectangle gauche présente un angle -a par rapport à l'axe central horizontal du rectangle central,

l'image corrigée à recadrer étant obtenue en agrégeant une bande centrale verticale de l'image obtenue par projection sur le rectangle central, une bande droite verticale de l'image par projection obtenue sur le rectangle droit et une bande gauche verticale de l'image obtenue par projection sur le rectangle gauche.

Dans un second aspect, l'invention propose un véhicule automobile comprenant au moins un système de vision panoramique tel que défini précédemment.

Des caractéristiques ou des modes de réalisation particuliers, utilisables seuls ou en combinaison pour ce véhicule automobile, sont :

le système de vision panoramique est adapté pour afficher sur l'écran portrait une vision panoramique du champ visuel situé à l'avant du véhicule automobile ;

le système de vision panoramique est adapté pour afficher sur l'écran portrait une vision panoramique du champ visuel situé derrière le véhicule automobile ;

le véhicule automobile comprend en outre au moins un corner radar adapté pour détecter et localiser un objet en mouvement dans une zone de détection couvrant au moins une partie d'une des zones couvertes par les caméras du système de vision panoramique, l'unité de traitement étant adaptée pour intégrer au moins une information relative à l'objet en mouvement dans la vision panoramique affichée sur l'écran.

Dans un troisième aspect, l'invention propose un procédé d'affichage d'une vision panoramique sur un écran, la vision panoramique étant couverte par l'intermédiaire de trois caméras équipées chacune d'un capteur optique, une caméra centrale dont le champ de vision est adapté pour permettre l'acquisition d'une zone centrale de la vision panoramique, une caméra latérale gauche dont le champ de vision est adapté pour permettre l'acquisition d'une zone latérale gauche de la vision panoramique recouvrant partiellement la zone centrale, et une caméra latérale droite dont le champ de vision est adapté pour permettre l'acquisition d'une zone latérale droite de la vision panoramique recouvrant partiellement la zone centrale de la vision panoramique, et l'écran étant au format portrait et comprenant trois zones d'affichage, une zone d'affichage gauche, une zone d'affichage centrale centrale et une zone d'affichage droite, le procédé comprenant :

- une étape de réception des images captées par les trois capteurs optiques ;
- une étape de recadrage des images capteurs selon un bandeau horizontal gauche pour les images issues du capteur de la caméra latérale gauche, un bandeau horizontal droit pour les images issues du capteur optique de la caméra latérale droite et selon un bandeau vertical central pour les images issues du capteur optique de la caméra centrale,
- une étape de rotation du bandeau horizontal gauche de 90° dans le sens inverse des aiguilles d'une montre et du bandeau horizontal droit de 90° dans le sens des aiguilles d'une montre ;
- une étape d'agrégation des trois bandeaux de sorte que la restitution de la vision panoramique sur l'écran soit constituée sur la zone d'affichage gauche du bandeau horizontal gauche tourné de -90°, sur la zone d'affichage centrale centrale du bandeau vertical central et sur la zone d'affichage droite du bandeau horizontal droit tourné de +90° ; et
- une étape d'affichage de l'image ainsi agrégée sur l'écran.

Des caractéristiques ou des modes de réalisation particuliers, utilisables seuls ou en combinaison pour ce procédé d'affichage, sont :

le procédé comprend en outre, avant l'étape de recadrage, une étape de correction et de transposition dans laquelle les images capteurs sont corrigées de la distorsion générée par les caméras ;

la correction et la transposition des images capteurs se font :

- par projection des pixels du capteur sur la surface interne d'une demi-sphère de rayon R1 et dont le centre et le sommet sont situés sur un axe optique principal de la caméra, les coordonnées des pixels capteur projetés sur la demi-sphère étant calculées grâce au théorème de Thalès et à l'équation de la sphère ; puis
- par projection des points de la demi-sphère sur la surface interne d'un demi-cylindre vertical de rayon R2 englobant la demi-sphère et dont l'axe de symétrie passe par le centre de la demi-sphère ; et enfin
- par projection des points du demi-cylindre sur un plan tangent au demi-cylindre formant ainsi l'image corrigée à recadrer ;

la correction et la transposition des images capteurs se font :

- par projection des pixels du capteur sur la surface interne d'une demi-sphère de rayon R1 et dont le centre et le sommet sont situés sur un axe optique principal de la caméra, les coordonnées des pixels capteur projetés sur la demi-sphère étant calculées grâce au théorème de Thalès et à l'équation de la sphère ; puis
- l'image projetée sur la demi-sphère est ensuite projetée sur trois rectangles, un rectangle central, un rectangle droit et un rectangle gauche, ces trois rectangles ayant la même orientation que le capteur et comprenant chacun un axe central vertical et un axe central horizontal, et tels que le rectangle central est parallèle au plan du capteur et tangent au sommet de la demi-sphère, l'axe central vertical du rectangle droit est tangent au bord vertical droit du rectangle central, l'axe central vertical du rectangle gauche est tangent au bord vertical gauche du rectangle central, et l'axe central horizontal du rectangle droit présente un angle $\alpha$ par rapport à l'axe central horizontal du rectangle central, et l'axe central horizontal du rectangle gauche présente un angle -a par rapport à l'axe central horizontal du rectangle central,
- l'image corrigée à recadrer étant obtenue en agrégeant une bande centrale verticale de l'image obtenue par projection sur le rectangle central, une bande droite verticale de l'image par projection obtenue sur le rectangle droit et une bande gauche verticale de l'image obtenue par projection sur le rectangle gauche

Enfin, dans un quatrième aspect, l'invention se rapporte à un produit programme d'ordinateur téléchargeable depuis un réseau de communication et/ou enregistré sur un support lisible par ordinateur et/ou exécutable par une unité de traitement, le produit programme d'ordinateur comprenant des instructions pour la mise en œuvre du procédé d'affichage tel que défini précédemment.

**Brève description des figures**

L'invention sera mieux comprise à la lecture de la description qui suit, faite uniquement à titre d'exemple, et en référence aux figures en annexe dans lesquelles :

- la figure 1 représente une vue du dessus (« Bird View ») d'un véhicule automobile équipé d'un système de vision actuel ;
- les figures 2a et 2b représentent le schéma optique d'une caméra classique telle qu'on peut la modéliser ; et
- la figure 3 représente un système de vision panoramique selon un mode de réalisation de l'invention ;

- les figures 4 à 7 représentent les étapes d'un modèle de correction et de transposition d'images selon une méthode dite de « projection sur un cylindre » ;
- les figures 8 à 11 représentent les étapes d'un modèle de correction et de transposition d'images selon une méthode dite de « reconstitution en trois parties » ;
- la figure 12 représente une image prise par une caméra d'un système de vision panoramique équipant un véhicule automobile sur laquelle apparaît une cible ;
- la figure 13 représente une modélisation spatiale de la cible de la figure 12 par rapport au véhicule équipé du système de vision panoramique ;
- les figurent 14 et 15 représentent les étapes de construction d'un rectangle indiquant la cible dans la modélisation spatiale de la figure 13. ;
- la figure 16 représente l'image de la figure 12 dans laquelle a été incrusté le rectangle indiquant la cible grâce à la modélisation spatiale réalisée dans les figures 13 à 15 ;
- la figure 17 représente l'image de la figure 12 corrigée et transposée selon une méthode dite de « reconstitution en trois parties » illustrées dans les figures 8 à 11, et dans laquelle a été incrusté le rectangle indiquant la cible grâce à la modélisation spatiale réalisée dans les figures 13 à 15;
- la figure 18 représente l'affichage d'une vision panoramique par un système de vision panoramique intégré dans un véhicule automobile selon un autre mode de réalisation de l'invention ;
- les figures 19a et 19b représentent des exemples d'affichages d'une vision panoramique sur un écran au format portrait selon l'invention ;
- la figure 20 représente le synoptique d'un procédé d'affichage d'une vision panoramique selon un mode de réalisation de l'invention ;
- la figure 21 représente le synoptique de l'étape S20 de la figure 20 implémentant les étapes de la méthode dite de « projection sur un cylindre » ; et
- la figure 22 représente le synoptique de l'étape S20 de la figure 20 implémentant les étapes de la méthode dite de « reconstitution en trois parties ».

**Définitions**

La **Figure 2a** représente le schéma optique d'une caméra 20 classique telle qu'on peut en trouver dans le commerce. Ce genre de caméra 20 comprend généralement un capteur 30 et un objectif 40 composé de plusieurs lentilles L.

Pour simplifier les calculs et la représentation géométrique de la caméra 20, il est possible de remplacer l'ensemble des lentilles L comprises dans l'objectif par une seule lentille équivalente $L_{eq}$ de focale f et de centre A comme illustré **Figure 2b,** le capteur étant positionné dans le plan focal de cette lentille équivalente.

L'axe optique 50, également appelé axe principal, de l'objectif 40 correspond à l'axe de symétrie de rotation des lentilles L composant l'objectif. Dans le cas de la représentation géométrique simplifiée, cet axe optique 50 peut être redéfini comme étant l'axe passant par le centre de la lentille équivalente $L_{eq}$ et le centre du capteur 30.

Pour la suite de cette description, le modèle de représentation optique d'une caméra sera le modèle simplifié de la **Figure 2b**.

**Modes de réalisation d'un système de vision panoramique**

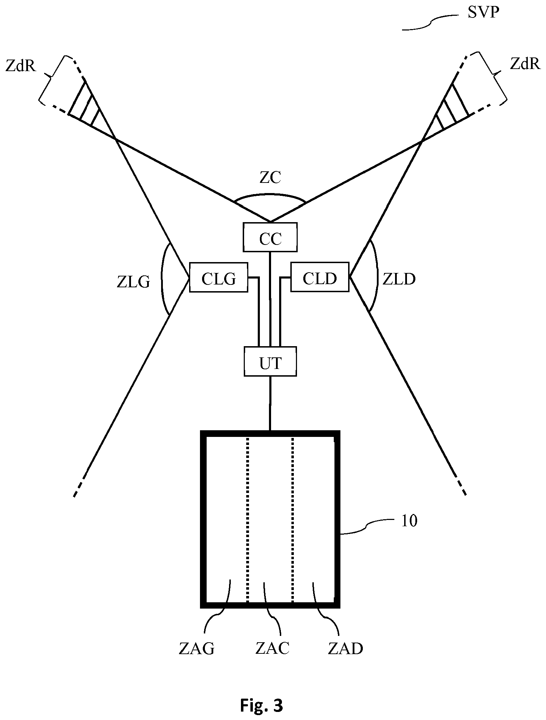

Un premier mode de réalisation selon l'invention est illustré **Figure 3** et représente un système de vision panoramique SVP.

Le système de vision panoramique SVP comprend :

- trois caméras équipées chacune d'un capteur optique : une caméra centrale CC dont le champ de vision est adapté pour permettre l'acquisition d'une zone centrale ZC de la vision panoramique, une caméra latérale gauche CLG dont le champ de vision est adapté pour permettre l'acquisition d'une zone latérale gauche ZLG de la vision panoramique recouvrant partiellement la zone centrale ZC, et une caméra latérale droite CLD dont le champ de vision est adapté pour permettre l'acquisition d'une zone latérale droite ZLD de la vision panoramique recouvrant partiellement la zone centrale ZC de la vision panoramique ;
- une unité de traitement UT d'images apte à recevoir et traiter les images captées par les trois capteurs optiques ; et
- un écran 10 apte à afficher la vision panoramique captée par les trois capteurs optiques et traitée par l'unité de traitement UT.

Les zones où se recouvrent les champs de vision ZLG, ZC et ZLD des caméras CLG, CC et CLD sont hachurées sur la **Figure 3**. De préférence, les caméras CLG, CC et CLD utilisées sont des caméras grand angle de type « fisheye » couvrant un champ de l'ordre de 180° voire plus.

Contrairement aux écrans utilisés pour l'affichage d'une image panoramique, l'écran 10 utilisé dans l'invention est au format portrait et comprend trois zones d'affichage, une zone d'affichage gauche ZAG, une zone d'affichage centrale ZAC et une zone d'affichage droite ZAD.

Afin de traiter les images captées par les trois capteurs optiques, l'unité de traitement UT d'images comprend :

- des moyens de recadrage des images capteurs selon un bandeau horizontal gauche BHG pour les images issues du capteur de la caméra latérale gauche CLG, un bandeau horizontal droit BHD pour les images issues du capteur optique de la caméra latérale droite CLD et selon un bandeau vertical central BVC pour les images issues du capteur optique de la caméra centrale CC, et
- des moyens de rotation du bandeau horizontal gauche BHG de 90° dans le sens inverse des aiguilles d'une montre et du bandeau horizontal droit BHD de 90° dans le sens des aiguilles d'une montre, et
- des moyens d'agrégation des 3 bandeaux de sorte que la restitution de la vision panoramique sur l'écran soit constituée sur la zone d'affichage gauche ZAG du bandeau horizontal gauche BHG tourné de -90°, sur la zone d'affichage centrale ZAC du bandeau vertical central BVC et sur la zone d'affichage droite ZAD du bandeau horizontal droit BHD tourné de +90°.

Les caméras de type fisheye présentent beaucoup de distorsion, il est avantageux que l'unité de traitement UT comprenne également des moyens de correction adaptés pour corriger la distorsion générée par les caméras CC, CLG et CLD, et pour transposer les images corrigées obtenues de chaque capteur avant le recadrage des images capteurs.

Pour procéder à cette correction et transposition, deux méthodes peuvent être utilisées :

- la méthode de projection sur un cylindre ; ou
- la méthode de reconstitution en trois parties.

Méthode de projection sur un cylindre :

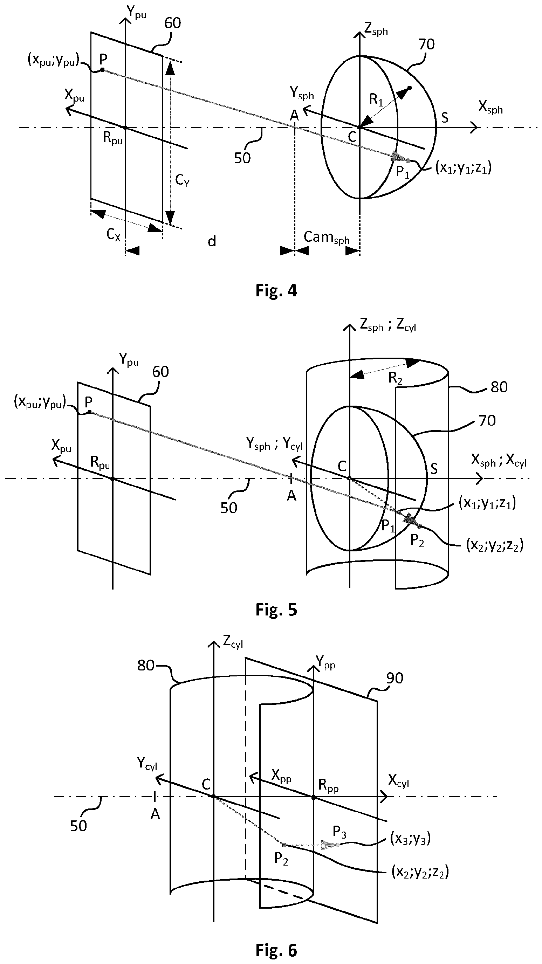

La méthode de projection sur un cylindre est illustrée sur les **Figures 4 à 7.**

Dans un premier temps et comme illustré sur la **Figure 4,** la correction et la transposition des images capteurs commencent par la projection des pixels du capteur sur la surface interne d'une demi-sphère 70 de rayon R1 et dont le centre C et le sommet S sont situés sur l'axe optique principal 50 de la caméra.

Les images natives issues de la caméra sont constituées de $Res_h$ pixels suivant la direction horizontale et $Res_v$ pixels suivant la direction verticale. Pour effectuer la simulation numérique, le plan du capteur 30 de la caméra considérée est virtuellement rapproché de la lentille équivalente à l'objectif de la caméra par homothétie centrée sur le centre A de la lentille équivalente. Un rectangle 60 de largeur $C_X$ et de hauteur $C_Y$ distant de d par rapport à la lentille équivalente représente ce nouveau plan capteur. On définit le repère orthonormé ($X_{pu}$ ; $Y_{pu}$) centré sur R1, le centre du rectangle 60 et donc le centre de l'image capteur ainsi projetée.

Dans ce repère ($X_{pu}$ ; $Y_{pu}$), un pixel image P a pour coordonnées ($x_{pu}$ ; $y_{pu}$) tel que :

$$\begin{cases} x_{pu} = \left( \dfrac{Res_h}{2} - i \right) * \dfrac{C_X}{Res_h * f} \\ y_{pu} = \left( \dfrac{Res_v}{2} - j \right) * \dfrac{C_Y}{Res_v * f} \end{cases} \qquad (E1)$$

Où :

- i est un entier compris dans l'intervalle $\left[ 1 ; \dfrac{Res_h}{2} \right]$ ;

- j est un entier compris dans l'intervalle $\left[ 1 : \dfrac{Res_v}{2} \right]$ ; et
- f est la focale de la caméra.

La demi-sphère 70 a pour repère orthonormé ($X_{sph}$ ; $Y_{sph}$ ; $Z_{sph}$) centré sur C le centre de la demi-sphère 70. Dans ce repère ($X_{sph}$ ; $Y_{sph}$ ; $Z_{sph}$), la projection du pixel P ($x_{pu}$ ; $y_{pu}$) a pour coordonnées $P_1$ ($x_1$ ; $y_1$ ; $z_1$).

Les coordonnées du point P1 ($x_1$ ; $y_1$ ; $z_1$) peuvent être calculées grâce au théorème de Thalès et à l'équation de la sphère.

Ainsi, l'application du théorème de Thalès donne entre ces deux pixels P et $P_1$ donne l'équation suivante :

$$\frac{z_1}{y_{pu}} = \frac{y_1}{x_{pu}} = \frac{x1+cam\_sph}{R} = \eta \qquad (E2)$$

Où :

$cam_{sph}$ représente la distance entre le centre A de la lentille équivalente et le centre C de la demi-sphère 70 ;
d est la distance entre le rectangle 60 représentant la projection du capteur et le centre A de la lentille équivalente à l'objectif de la caméra considérée ; et
$\eta$ est une constante (i.e. un nombre réel).

Les coordonnées de P1 peuvent donc s'écrire :

$$\begin{cases} x_1 = \eta * R - cam\_sph \\ y_1 = \eta \cdot xpu \\ z_1 = \eta * ypu \end{cases} \qquad (E3)$$

Le point P1 appartenant la demi-sphère, ces coordonnées vérifient l'équation de celle-ci à savoir :

$$x_1{}^2 + y_1{}^2 + z_1{}^2 = R^2 \qquad (E4)$$

$$(\eta \cdot x_{pu})^2 + (\eta \cdot y_{pu})^2 + (\eta R - cam\_sph)^2 = R^2 \qquad (E5)$$

La résolution de cette équation du second degré nous permet de déduire la constante positive $\eta$ :

$$\eta = \frac{R * cam_{sph} + \sqrt{R^2 * cam_{sph}{}^2 + (x_{pu}{}^2 + y_{pu}{}^2 + R^2) * (R^2 - cam_{sph}{}^2)}}{x_{pu}{}^2 + y_{pu}{}^2 + R^2} \qquad (E6)$$

Et donc d'en déduire les valeurs de $x_{sph}$, $y_{sph}$ et $z_{sph}$.

Si on transpose en coordonnées sphériques, nous obtenons alors les angles de latitude et longitude suivants :

$$\begin{cases} \vartheta = \operatorname{atan}\left(\frac{y_1}{x_1}\right) \\ \varphi = -\operatorname{asin}\left(\frac{z_1}{R}\right) \end{cases} \qquad (E7)$$

Le point P1 est ensuite projeté sur la surface interne d'un demi-cylindre 80 vertical de rayon R2 englobant la demi-sphère 70 et dont l'axe de symétrie passe par le centre C de la demi-sphère 70.

Le demi-cylindre 80 a pour repère orthonormé ($X_{cyl}$ ; $Y_{cyl}$ ; $Z_{cyl}$) centré sur C le centre de la demi-sphère 70. Dans ce repère ($X_{cyl}$ ; $Y_{cyl}$ ; $Z_{cyl}$), la projection du point P1 est un point P2 de coordonnées ($x_2$ ; $y_2$ ; $z_2$), tel que :

$$\begin{cases} x_2 = R_2 * \cos(\theta) \\ y_2 = \sqrt{R_2{}^2 - x_2{}^2} \\ z_2 = z1 \end{cases} \qquad (E8)$$

Enfin, le point P2 est projeté sur un plan tangent 90 au demi-cylindre 80.

Le plan tangent 90 a pour repère orthonormé ($X_{pp}$ ; $Y_{pp}$) centré sur le point $R_{pp}$ correspondant à l'intersection de l'axe optique 50 avec plan tangent 90. Dans ce repère $(X_{pp} ; Y_{pp})$, la projection du point P2 est un point P3 de coordonnées $(x_3 ; y_3)$, tel que :

$$\begin{cases} x_3 = \dfrac{y2}{\eta_2} \\ y_3 = \dfrac{z2}{\eta_2} \end{cases} \qquad (E9)$$

Où

$$\eta_2 * R = x2 + cam\_sph \qquad (E10)$$

L'image ainsi obtenue par la projection de l'ensemble des pixels P du rectangle 60 est ensuite redimensionnée à la taille de l'image capteur initiale par homothétie. Un pixel P4 de cette image corrigée et redimensionnée a donc les coordonnées suivantes :

$$\begin{cases} x_4 = \dfrac{Res_h}{2} - f * x_3 * \dfrac{Res_h}{C_X} \\ y_4 = \dfrac{Res_v}{2} - f * y_3 * \dfrac{Res_v}{C_Y} \end{cases} \qquad (E11)$$

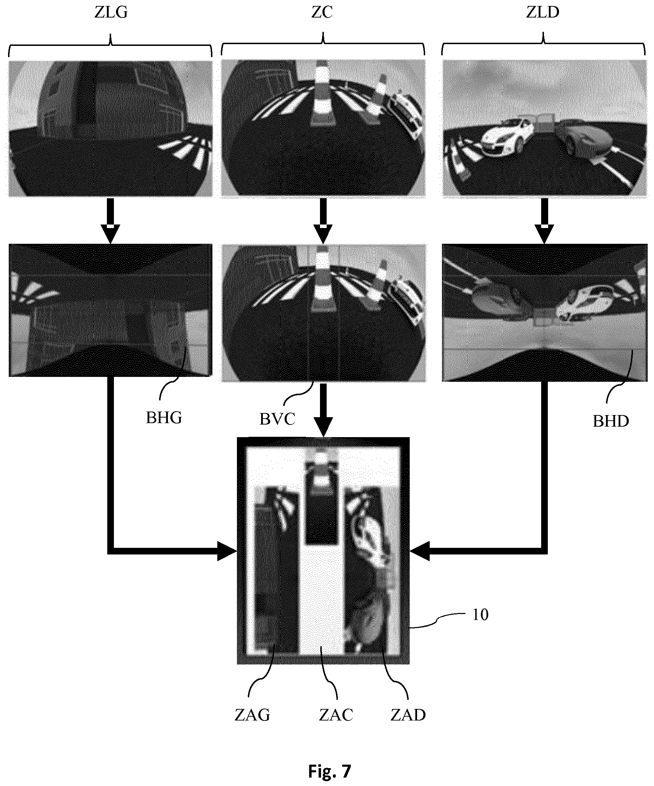

La projection sur la demi-sphère ayant généré une inversion haut/bas (H/B) et gauche/droite (G/D) de l'image, avant de procéder au recadrage de l'image corrigée et redimensionnée, une nouvelle inversion H/B et G/D est réalisée.
Il est à noter que cette dernière opération d'inversion peut être remplacée en modifiant l'angle de rotation des bandeaux horizontaux gauche et droit comme l'illustre la **Figure 7.**
L'image en haut à gauche de la **Figure 7** correspond à l'image de la zone latérale gauche ZLG prise par la caméra latérale gauche CLG. L'image en haut au centre correspond à l'image de la zone centrale ZC prise par la caméra centrale CC et l'image en haut à droite correspond à l'image de la zone latérale droite ZLD prise par la caméra latérale droite CLD.
Sur cette **Figure 7,** l'image du milieu à gauche correspond à l'image corrigée et redimensionnée selon la méthode de projection sur un cylindre précédemment décrite et sans inversion supplémentaire H/B G/D de l'image prise par la caméra latérale gauche CLG, de même que pour l'image du milieu à droite correspondant à l'image traitée issue de la caméra latérale droite CLD.
Les cadres présents sur les images du milieu correspondent respectivement de gauche à droit : au bandeau horizontal gauche BHG, au bandeau vertical central BVC et au bandeau horizontal droit BHD.
L'image de la caméra centrale CC étant faiblement distordue, il est possible de ne pas corriger et transposer celle-ci avant le recadrage comme illustré sur l'image centrale de la **Figure 7**. Cela permet de gagner du temps et des ressources de calcul.
Une fois le recadrage de chaque image effectuée, et en l'absence d'une inversion H/B G/D supplémentaire, les moyens de rotation tournent le bandeau horizontal gauche BHG de -90° et le bandeau horizontal droit BHD de +90°. Puis, les moyens d'agrégation réunissent les 3 bandeaux et les affichent sur l'écran 10 avec sur la zone d'affichage gauche ZAG le bandeau horizontal gauche BHG, sur la zone d'affichage centrale ZAC le bandeau vertical central BVC et sur la zone d'affichage droite ZAD le bandeau horizontal droit BHD.

Méthode de reconstitution en trois parties :

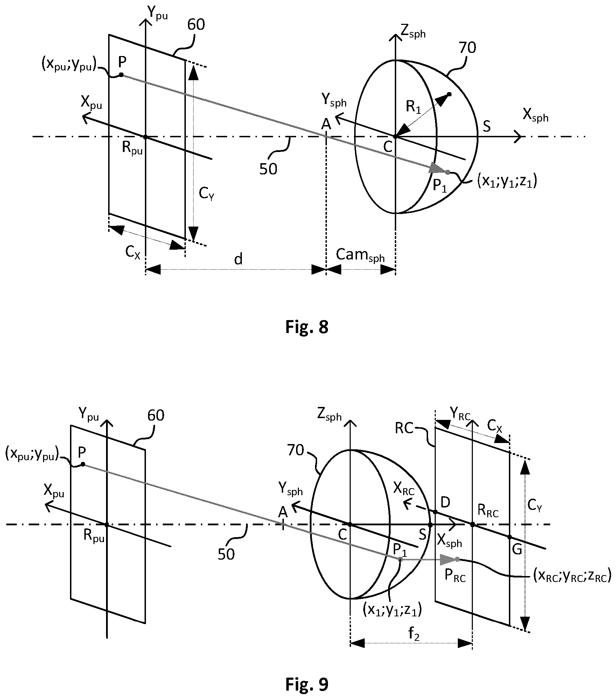

La méthode de reconstitution en trois parties est illustrée sur les **Figures 8 à 11.**
Dans un premier temps et comme illustré sur la **Figure 8**, la correction et la transposition des images capteurs commencent par la projection des pixels du capteur sur la surface interne d'une demi-sphère 70 de rayon R1 et dont le centre C et le sommet S sont situés sur l'axe optique principal 50 de la caméra. Cette étape est la même que décrite précédemment.
Puis le point P1 $(x_1 ; y_1 ; z_1)$ obtenu après projection d'un pixel P $(x_{pu} ; y_{pu})$ du rectangle 60 sur la demi-sphère 70, est projeté sur trois rectangles : un rectangle central RC, un rectangle droit RD et un rectangle gauche RG.
Ces trois rectangles RC, RG et RD ont la même orientation que le capteur et comprennent chacun un axe central vertical et un axe central horizontal. Comme le rectangle 60, ils ont pour dimension Cx en largeur et $C_Y$ en hauteur.

Le rectangle central RC est parallèle au plan du capteur et donc au rectangle 60 et situé à une distance $f_2$ du centre C de la demi-sphère 70. La

**Figure 9** illustre la projection du point P1 sur le rectangle central RC. On définit le repère orthonormé ($X_{RC}$; $Y_{RC}$; $Z_{RC}$) associé au rectangle central RC et centré sur le point $R_{RC}$ centre du rectangle central RC par lequel passe l'axe optique 50.

Dans ce repère ($X_{RC}$; $Y_{RC}$), la projection du point P1 est un point $P_{RC}$ de coordonnées ($x_{RC}$ ; $y_{RC}$), tel que :

$$\begin{cases} x_{RC} = \dfrac{y_1.f2}{x_1.} \\ y_{RC} = \dfrac{z_1.f2}{x_1.} \end{cases} \qquad \text{(E12)}$$

Soit, après redimensionnement à la taille de l'image capteur par homothétie :

$$\begin{cases} x_{redim\_RC} = \dfrac{Res_h}{2} - x_{RC} * \dfrac{Res_h}{C_X.2} \\ y_{redim\_RC} = \dfrac{Res_v}{2} - y_{RC} * \dfrac{Res_v}{C_Y.2} \end{cases} \qquad \text{(E13)}$$

Concernant les rectangles gauche RG et droit RD : l'axe central vertical du rectangle droit RD est tangent au bord vertical droit du rectangle central RC, l'axe central vertical du rectangle gauche RG est tangent au bord vertical gauche du rectangle central RC, et l'axe central horizontal du rectangle droit RD présente un angle $\alpha$ par rapport à l'axe central horizontal du rectangle central RC, et l'axe central horizontal du rectangle gauche RG présente un angle -a par rapport à l'axe central horizontal du rectangle centra RC.

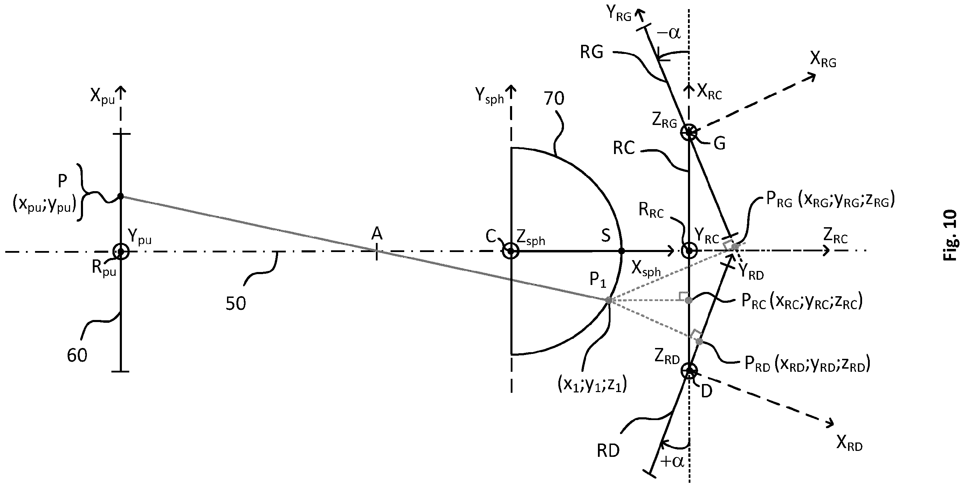

La **Figure 10** représente une vue de dessus de la **Figure 9** avec la présence cette fois des rectangles gauche RG et droit RD. On peut définir un repère orthonormé ($X_{RG}$; $Y_{RG}$; $Z_{RG}$) de centre G associé au rectangle gauche RG, et un repère orthonormé ($X_{RD}$; $Y_{RD}$; $Z_{RD}$) de centre D associé au rectangle droit RD. Où, le point G correspond au centre du rectangle gauche RG et situé sur le bord gauche du rectangle central RC et le point D correspond au centre du rectangle droit RD situé sur le bord droit du rectangle central RC.

Le centre C de la demi-sphère 70 dans le repère ($X_{RG}$ ; $Y_{RG}$ ; $Z_{RG}$) centré sur G a pour coordonnées ($x_{c\_RG}$ ; $y_{c\_RG}$ ; $z_{c\_RG}$) :

$$\begin{cases} x_{C\_RG} = \dfrac{c_X}{2} * \sin(\alpha) + f_2 * \cos(\alpha) \\ y_{C\_RG} = -\dfrac{c_X}{2} * \cos(\alpha) + f_2 * \sin(\alpha) \\ z_{C\_RG} = 0.0 \end{cases} \qquad \text{(E14)}$$

Le point P1, dans le repère ($X_{RC}$ ; $Y_{RC}$ ; $Z_{RC}$) centré sur $R_{RC}$ associé au rectangle central RC, a pour coordonnées ($x_{1\_RC}$ ; $y_{1\_RC}$ ; $z_{1\_RC}$) tel que :

$$\begin{cases} x_{1\_RC} = f_2 - x_1 \\ y_{1\_RC} = y_1 \\ z_{1\_RC} = z_1 \end{cases} \qquad \text{(E15)}$$

Donc, dans le repère ($X_{RG}$ ; $Y_{RG}$ ; $Z_{RG}$) centré sur G associé au rectangle gauche RG, le point P1 a pour coordonnées ($x_{1\_RG}$ ; $y_{1\_RG}$ ; $z_{1\_RG}$), tel que :

$$\begin{cases} x_{1\_RG} = \dfrac{c_x}{2} * \sin(\alpha) + x_{1\_RC} * \cos(\alpha) - y_{1\_RC} * \sin(\alpha) \\ y_{1\_RG} = -\dfrac{c_x}{2} * \cos(\alpha) + x_{1\_RC} * \sin(\alpha) + y_{1\_RC} * \sin(\alpha) \\ z_{1\_RG} = z_{1\_RC} \end{cases} \qquad \text{(E16)}$$

On définit le point $I_G$ comme le point d'intersection entre la droite reliant le centre C de la demi-sphère 70 au point P1 et le plan défini par le rectangle gauche RG. Dans le repère associé au rectangle gauche RG ($X_{RG}$ ; $Y_{RG}$ ; $Z_{RG}$) centré sur G, les coordonnées du point $I_G$ sont (0; $y_{IG}$ ; $z_{IG}$).

Comme le centre C de la demi-sphère 70, le point P1 et le point $I_G$ sont alignés, on peut écrire :

$$\begin{cases} 0 - x_{C\_RG} = t_2 * (x_{c\_RG} - x_{RG}) \\ y_{IG} - y_{C\_RG} = (y_{c\_RG} - y_{RG}) * t_2 \\ z_{IG} - z_{C\_RG} = (z_{c_{RG}} - z_{RG}) * t_2 \end{cases} \qquad (E17)$$

soit

$$\begin{cases} t_2 = -\dfrac{x_{c\_RG}}{(x_{c\_RG} - x_{RG})} \\ y_{IG} = (-y_{RG} + y_{c\_RG}) * t_2 + y_{c\_RG} \\ z_{IG} = (-z_{RG} + z_{c\_RG}) * t_2 + z_{c\_RG} \end{cases} \qquad (E18)$$

Où $t_2$ est une constante (i.e. un nombre réel).

D'après cette équation E18 et en ce remettant dans une image de la taille de l'image capteur, le point $I_G$ a pour coordonnées :

$$\begin{cases} x_{IG\_cap} = \dfrac{Res_h}{2} - y_{IG} * \dfrac{Res_h}{C_X \cdot 2} \\ y_{IG,cap} = \dfrac{Res_v}{2} - z_{IG} * \dfrac{Res_v}{C_Y \cdot 2} \end{cases} \qquad (E19)$$

De la même manière, le centre C de la demi-sphère 70 dans le repère ($X_{RD}$ ; $Y_{RD}$ ; $Z_{RD}$) centré sur D a pour coordonnées ($x_{c\_RD}$ ; $y_{c\_RD}$ ; $z_{c\_RD}$) :

$$\begin{cases} x_{C\_RD} = -\dfrac{C_X}{2} * \sin(\alpha) + f_2 * \cos(\alpha) \\ y_{C\_RD} = -\dfrac{C_X}{2} * \cos(\alpha) - f_2 * \sin(\alpha) \\ z_{C\_RD} = 0.0 \end{cases} \qquad (E20)$$

Or, le point P1, dans le repère ($X_{RC}$ ; $Y_{RC}$ ; $Z_{RC}$) centré sur $R_{RC}$ associé au rectangle central RC, a pour coordonnées ($x_{1\_RC}$ ; $y_{1\_RC}$ ; $z_{1\_RC}$) tel que :

$$\begin{cases} x_{1\_RC} = f_2 - x_1 \\ y_{1\_RC} = y_1 \\ z_{1\_RC} = z_1 \end{cases} \qquad (E15)$$

Donc, dans le repère ($X_{RD}$ ; $Y_{RD}$ ; $Z_{RD}$) centré sur D associé au rectangle droit RD, le point P1 a pour coordonnées ($x_{1\_RD}$ ; $y_{1\_RD}$ ; $z_{1\_RD}$), tel que :

$$\begin{cases} x_{1\_RD} = -\dfrac{C_x}{2} * \sin(\alpha) + x_{1\_RC} * \cos(\alpha) + y_{1\_RC} * \sin(\alpha) \\ y_{1\_RD} = -\dfrac{C_x}{2} * \cos(\alpha) - x_{1\_RC} * \sin(\alpha) - y_{1\_RC} * \sin(\alpha) \\ z_{1\_RD} = z_{1\_RC} \end{cases} \qquad (E16b)$$

On définit le point $I_D$ comme le point d'intersection entre la droite reliant le centre C de la demi-sphère 70 au point P1 et le plan défini par le rectangle droit RD. Dans le repère du rectangle droit RD ($X_{RD}$ ; $Y_{RD}$ ; $Z_{RD}$) centré sur D, les coordonnées du point $I_D$ sont (0 ; $y_{ID}$ ; $z_{ID}$).

Comme le centre C de la demi-sphère 70, le point P1 et le point $I_D$ sont alignés, on peut écrire :

$$\begin{cases} 0 - x_{c\_RD} = t_3 * (x_{c\_RD} - x_{RD}) \\ y_{ID} - y_{c\_RD} = t_3 * (y_{c\_RD} - y_{RD}) \\ z_{ID} - z_{c\_RD} = t_3 * (z_{c\_RD} - z_{RD}) \end{cases} \quad \text{(E17b)}$$

soit

$$\begin{cases} t_3 = -\dfrac{x_{sb}}{(x_{sb} - x_{pb})} \\ y_{pu} = \left(-y_{pb} + y_{sb}\right) * t_3 + y_{sb} \\ z_{pu} = \left(-z_{pb} + z_{sb}\right) * t_3 + z_{sb} \end{cases} \quad \text{(E18b)}$$

Où $t_3$ est une constante (i.e. un nombre réel).

D'après cette équation E18 et en ce remettant dans une image de la taille de l'image capteur, le point $I_D$ a pour coordonnées :

$$\begin{cases} x_{ID\_cap} = \dfrac{Res_h}{2} - y_{ID} * \dfrac{Res_h}{C_X \cdot 2} \\ y_{ID,cap} = \dfrac{Res_v}{2} - z_{ID} * \dfrac{Res_v}{C_Y \cdot 2} \end{cases} \quad \text{(E19b)}$$

Ainsi, l'image corrigée à recadrer est obtenue en agrégeant une bande centrale verticale Im1 de l'image obtenue par projection sur le rectangle central RC, une bande droite verticale Im2 de l'image par projection obtenue sur le rectangle droit RD et une bande gauche verticale Im3 de l'image obtenue par projection sur le rectangle gauche RG.

C'est-à-dire que la bande verticale droite Im1 est créée pour les pixels de coordonnées ($x_{ID}$ ; $y_{ID}$) lorsque $x_{ID}$ est compris entre 0 et $x_{epi,1}$.

La bande verticale centrale Im2 est créée pour les pixels de coordonnées ($x_{redim\_RC}$ ; $y_{redim\_RC}$) lorsque $x_{redim\_RC}$ est compris entre $x_{epi,1}$ et $x_{epi,1}$+L.

Et enfin la bande verticale gauche Im3 est créée pour les pixels de coordonnées ($x_{IG}$ ; $y_{IG}$) lorsque $x_{IG}$ est compris entre $x_{epi,1}$+L et $Res_h$.

Comme précédemment, la projection sur la demi-sphère ayant généré une inversion haut/bas (H/B) et gauche/droite (G/D) de l'image, avant de procéder au recadrage de l'image corrigée et redimensionnée, une nouvelle inversion H/B et G/D est réalisée.

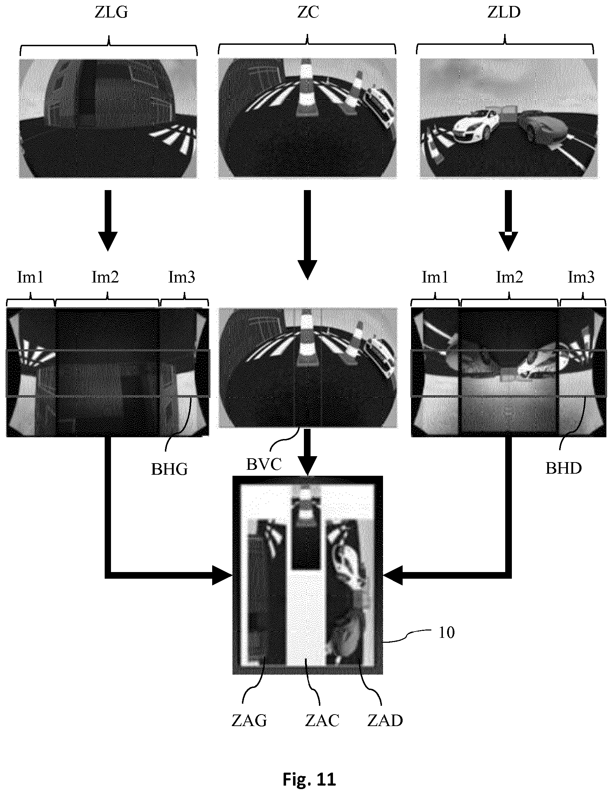

Il est à noter que cette dernière opération d'inversion peut être remplacée en modifiant l'angle de rotation des bandeaux horizontaux gauche et droit comme l'illustre la **Figure 11**.

L'image en haut à gauche de la **Figure 11** correspond à l'image de la zone latérale gauche ZLG prise par la caméra latérale gauche CLG. L'image en haut au centre correspond à l'image de la zone centrale ZC prise par la caméra centrale CC et l'image en haut à droite correspond à l'image de la zone latérale droite ZLD prise par la caméra latérale droite CLD.

Sur cette **Figure 11,** l'image du milieu à gauche correspond à l'image corrigée et redimensionnée selon la méthode de reconstitution en trois parties et sans inversion supplémentaire H/B G/D de l'image prise par la caméra latérale gauche CLG, de même que pour l'image du milieu à droite correspondant à l'image traitée issue de la caméra latérale droite CLD.

Les cadres présents sur les images du milieu correspondent respectivement de gauche à droit : au bandeau horizontal gauche BHG, au bandeau vertical central BVC et au bandeau horizontal droit BHD.

L'image de la caméra centrale CC étant faiblement distordue, il est possible de ne pas corriger et transposer celle-ci avant le recadrage. Cela permet de gagner du temps et des ressources de calcul.

Une fois le recadrage de chaque image effectuée, et en l'absence d'une inversion H/B G/D supplémentaire, les moyens de rotation tournent le bandeau horizontal gauche BHG de -90° et le bandeau horizontal droit BHD de +90°. Puis, les moyens d'agrégation réunissent les 3 bandeaux et les affichent sur l'écran 10 avec sur la zone d'affichage gauche ZAG le bandeau horizontal gauche BHG, sur la zone d'affichage centrale ZAC le bandeau vertical central BVC et sur la zone d'affichage droite ZAD le bandeau horizontal droit BHD.

Il est à noter que, quelle que soit la méthode de correction et transposition utilisée, chaque bandeau peut être redimensionnée ou réajustée, c'est-à-dire agrandie ou rétrécie en gardant les proportions de l'image, en fonction des dimensions de l'écran 10 sur lequel les bandeaux sont affichés.

**Modes de réalisation d'un véhicule automobile équipé d'un système de vision panoramique**

Dans un deuxième aspect, l'invention porte sur un véhicule automobile.

Selon un mode général de réalisation, le véhicule automobile comprend au moins un système de vision panoramique SVP tel que décrit précédemment.

Comme illustré sur la **Figure 1**, la plupart des véhicules automobiles actuels sont équipés de une à quatre caméras 20 positionnées à l'avant, à l'arrière et/ou sur les ailes latérales du véhicule automobile 1.

Ainsi, dans ce mode de réalisation général, les caméras du système de vision panoramique SVP peuvent être trois des caméras 20 du véhicule automobile, chacune une partie de la vision panoramique à afficher sur un écran 10 au format portrait intégré dans l'habitacle du véhicule 1.

Selon un premier mode de réalisation dérivé du mode général, le système de vision panoramique SVP est adapté pour afficher sur l'écran 10 portrait une vision panoramique du champ visuel situé à l'avant du véhicule.

Dans ce premier mode de réalisation, la caméra centrale CC correspond à une caméra 20 située à l'avant du véhicule automobile 1. Cette caméra centrale CC peut être intégrée par exemple au niveau du tableau de bord, du pare-brise, du toit ou du pare-chocs avant du véhicule automobile 1.

La caméra latérale gauche CLG, respectivement la caméra latérale droite CLD, correspond à une caméra 20 située sur l'aile gauche, respectivement sur l'aile droite, du véhicule automobile 1. Les caméras latérales gauche CLG et droite CLD peuvent par exemple être intégrées aux rétroviseurs gauche et droit du véhicule automobile 1.

Selon un second mode de réalisation dérivé du mode général, le système de vision panoramique SVP est adapté pour afficher sur l'écran 10 portrait une vision panoramique du champ visuel situé derrière le véhicule automobile.

Dans ce cas-là, la caméra centrale CC correspond à une caméra située à l'arrière du véhicule automobile 1. Cette caméra centrale CC peut être intégrée par exemple au niveau de la plage arrière, de la vitre arrière, du toit ou du pare-chocs arrière du véhicule automobile 1.

La caméra latérale gauche CLG, respectivement la caméra latérale droite CLD, correspond à une caméra 20 située sur l'aile gauche, respectivement sur l'aile droite, du véhicule automobile 1. Les caméras latérales gauche CLG et droite CLD peuvent par exemple être intégrées aux rétroviseurs gauche et droit du véhicule automobile 1.

Ainsi, si le véhicule automobile comprend quatre caméras 20 situées respectivement à l'avant, à l'arrière et sur les ailes gauche et droite du véhicule, il est possible de combiner le premier et le second modes de réalisation dérivés du mode général. Dans ce cas-là l'unité de traitement UT d'images peut être commune aux deux systèmes de vision panoramiques SVP tout comme les caméras latérales gauche CLG et droite CLD.

Une vue panoramique telle que présentée ci-dessus permet ainsi de visualiser l'arrivée d'un véhicule, d'un piéton ou d'un cycliste, dans le sens perpendiculaire à l'axe longitudinal du véhicule, latéralement à plusieurs dizaines de mètres.

Cependant, un inconvénient est que la cible détectée n'est pas aisément visible si elle est située à plusieurs dizaines de mètres car de résolution trop petite.

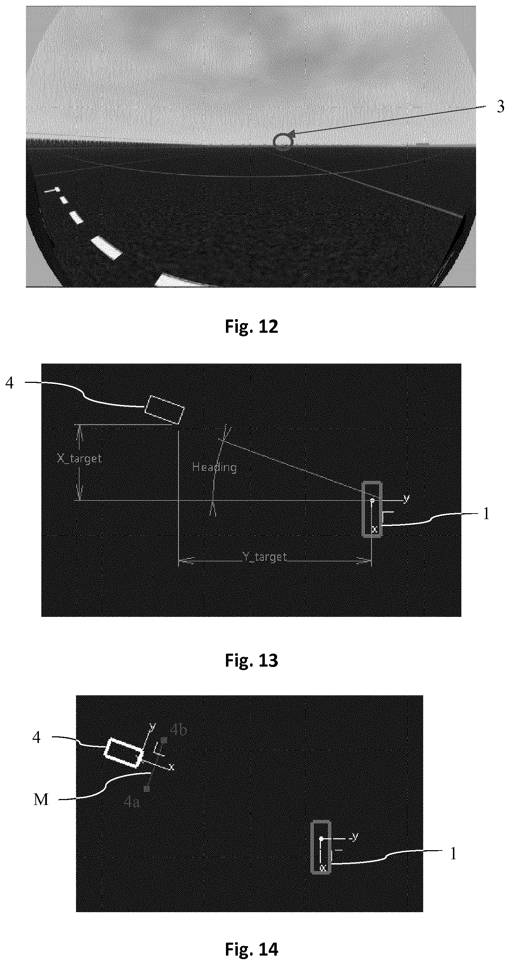

La **Figure 12** illustre une image prise par une des caméras latérales du système de vision panoramique sur laquelle un second véhicule automobile 3 surgit à 60m de l'axe longitudinal du véhicule automobile 1 équipé du système de vision panoramique SVP tel que précédemment décrit. Ce second véhicule automobile 3 n'est pas aisé à distinguer représentant à peine quelques pixels caméras.

Pour pallier cet inconvénient, l'invention propose un troisième mode de réalisation compatible des précédents et dans lequel le véhicule automobile 1 comprend en outre au moins un corner radar adapté pour détecter et localiser un objet en mouvement dans une zone de détection ZD couvrant au moins une partie d'une des zones ZLG, ZC et ZLD couvertes par les caméras CLG, CC et CLD du système de vision panoramique SVP, l'unité de traitement UT étant adaptée pour intégrer au moins une information relative à l'objet en mouvement dans la vision panoramique affichée sur l'écran 10.

En général, les corner radars utilisés ont un angle horizontal de vision d'environ 135° et une portée de détection d'environ 60m.

Des données de sorties d'un corner radar sont :

- la position longitudinale (en X) de la cible : X_target ;
- la position latérale (en Y) de la cible : Y_target ;
- la direction d'une cible 4 par rapport à un axe du véhicule automobile 1 équipé du système de vision panoramique SVP et d'au moins un corner radar, par exemple l'axe Y latéral décrit dans le repère illustré **Figure 13,** repérée par l'angle Heading.

- le sens d'évolution de la cible 4, indiquant si elle se dirige vers l'égo véhicule 1 ou si elle s'en éloigne ; et
- le type de la cible 4 : véhicule, piéton ou encore cycliste par exemple.

Pour chaque cible détectée, la construction suivante est effectuée :

Sur la **Figure 14** illustrant une vue de dessus du véhicule automobile 1, on définit la largeur de la cible 4 largc et sa longueur longc. Ces 2 valeurs sont sélectionnées en fonction du type de la cible 4.

Les coordonnées du point rouge inférieur 4a sont :

$$\begin{cases} X1 = X\_target + 0.01m * k * \cos(\text{Heading}) + 0.01m * k * \sin(\text{Heading}) \\ Y1 = Y\_target - 0.01m * k * \sin(\text{Heading}) + 0.01m * k * \cos(\text{Heading}) \end{cases}$$

$$(E21)$$

Où k est un coefficient multiplicateur.

Les coordonnées du point rouge supérieur 4b sont :

$$\begin{cases} X2 = X\_target2 - 0.01m * k * \cos(\text{Heading}) + 0.01m * k * \sin(\text{Heading}) \\ Y2 = Y\_target2 + 0.01m * k * \sin(\text{Heading}) + 0.01m * k * \cos(\text{Heading}) \end{cases}$$

$$(E22)$$

Avec:

$$\begin{cases} Xtarget2 = X\_target - largc * \cos(\text{Heading}) \\ Ytarget2 = Y\_target + largc * \sin(\text{Heading}) \end{cases} \qquad (E23)$$

La ligne M rouge reliant les deux points 4a et 4b est tracée.

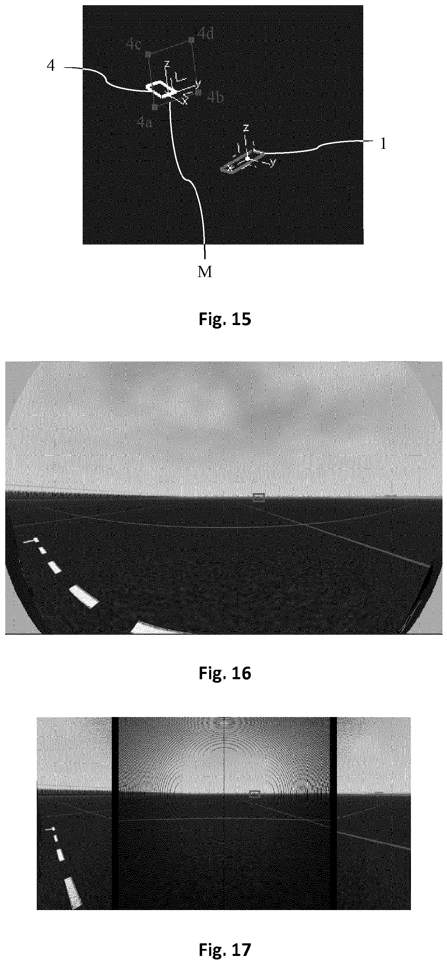

Comme illustré sur la **Figure 15**, dans le plan passant par M et la verticale, deux autres points 4c et 4d sont construits, de coordonnées :

$$\begin{cases} X3 = X1 \\ Y3 = Y1 \\ Z3 = k * hc \end{cases} \qquad (E24)$$

Où hc est la hauteur de la cible, sélectionnée en fonction de son type ; et

$$\begin{cases} X4 = X2 \\ Y4 = Y2 \\ Z4 = k * hc \end{cases} \qquad (E25)$$

Le rectangle passant par les quatre points 4a, 4b, 4c et 4d est ainsi construit.

Puis il est projeté dans le plan de l'image native. Une telle méthode de projection de points 3D dans l'image d'une caméra fisheye est décrite dans le brevet WO2017144826A1. Dans le cas présent, les guidelines construits dans le WO2017144826A1 sont remplacés par le rectangle construit comme illustré sur la **Figure 16**.

Le coefficient f varie en fonction de la distance Ytarget. Une « map » (carte) de correspondance est construite lors d'une phase de mise au point.

La **Figure 17** illustre le cas où l'information relative à l'objet en mouvement issue du corner radar est intégrée dans l'image corrigée et transposée selon la méthode de reconstitution en trois parties.

Selon une autre option de ce troisième mode de réalisation, il est possible :

D'afficher un modèle de véhicule, piéton ou cycliste, k fois agrandis. Le rectangle rouge dans l'image finale est alors remplacé par l'image symbolique d'une face avant ou face arrière d'un véhicule, d'un piéton ou d'un cycliste.

L'information 'sens d'évolution de la cible' est alors utilisée.

Ou bien d'afficher un « crop » (rognage) de l'image, k fois agrandi. L'intérieur du rectangle rouge est rogné puis f fois agrandi. Le pixel du centre du rectangle est calculé : i,j. L'image ainsi constituée est superposée à l'image finale en i,j.

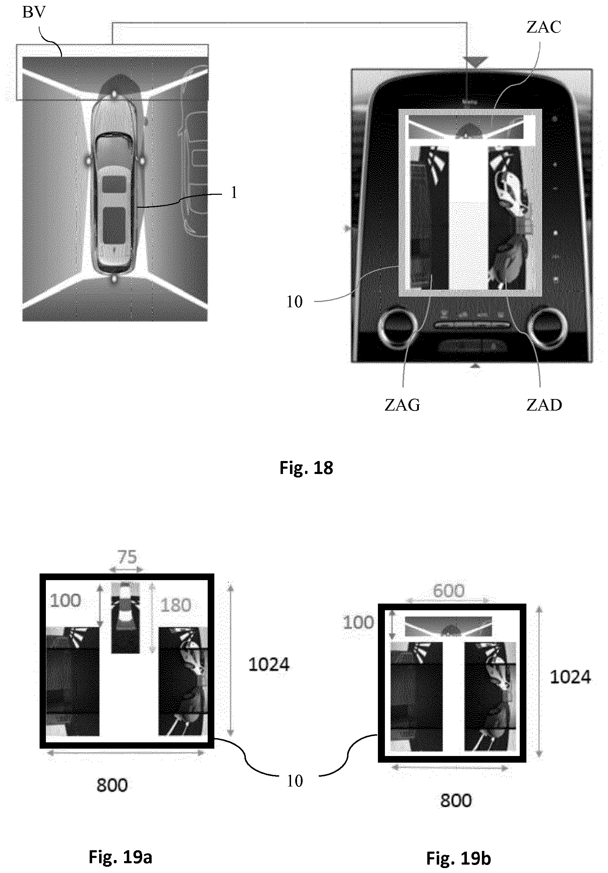

Selon un quatrième mode de réalisation compatible des précédents et comme illustré sur la **Figure 18,** lorsque la vision « bird view » BV (vision du dessus) du véhicule automobile 1 est disponible, il est possible de remplacer l'image de la caméra centrale CC située à l'avant (respectivement arrière) du véhicule par l'image de la partie avant (respectivement de la partie arrière) du véhicule automobile 1 visible sur la « bird view » BV.

Ce mode de réalisation peut être avantageux car l'ajout d'une partie de la vue avant en partie centrale de l'écran 10 pourrait induire certains conducteurs en erreur dans le cas où des obstacles bas sont présents dans l'environnement proche du véhicule. Dans ce cas, l'affichage de la « bird view » est possible pour visualiser ce type d'obstacle.

Dans ce cas-là, la disposition et la forme des zones d'affichages centrale ZAC, gauche ZAG et droite ZAD est à adapter.

En effet, le bandeau sélectionné par recadrage de la vision « bird view » BV n'étant pas vertical comme c'était le cas avec l'image issue de la caméra centrale, la zone d'affichage centrale ZAC n'est plus une bande verticale mais horizontale. Ainsi, selon la partie de la « bird view » BV intégrée, la zone d'affichage centrale ZAC sera plutôt située en haut de l'écran 10 (cf. image droite sur la **Figure 18**) dans le cas de l'affichage de la partie avant du véhicule automobile 1 issue de la « bird view » BV (cf. image gauche sur la **Figure 18),** ou en bas de l'écran 10 dans le cas de l'affichage de la partie arrière du véhicule automobile 1 issue de la « bird view » BV.

Les **Figures 19a et 19b** représentent des exemples d'agencement des zones d'affichage gauche, droite et centrale en fonction de la taille de l'écran 10.

Dans les deux figures l'écran 10 est un écran standard de 800 pixels de largeur et de 1024 pixels de hauteur.

Sur la **Figure 19a,** un bandeau vertical central de l'image de la caméra centrale CC et redimensionné sur 75x180 pixels est affiché dans la zone d'affichage centrale ZAC de l'écran 10 située entre les zones d'affichage gauche ZAG et droite ZAD.

Sur la **Figure 19b,** c'est un bandeau horizontal de la « bird view » BV redimensionné sur 600x100 pixels qui est affiché dans la zone centrale ZAC située sur la partie supérieure de l'écran 10 et au-dessus des zones d'affichage gauche ZAG et droite ZAD.

## Modes de réalisation d'un procédé d'affichage d'une vision panoramique sur un écran

Dans un troisième aspect, l'invention porte sur un procédé d'affichage d'une vision panoramique sur un écran, la vision panoramique étant couverte par l'intermédiaire de trois caméras équipées chacune d'un capteur optique, une caméra centrale CC dont le champ de vision est adapté pour permettre l'acquisition d'une zone centrale ZC de la vision panoramique, une caméra latérale gauche CLG dont le champ de vision est adapté pour permettre l'acquisition d'une zone latérale gauche ZLG de la vision panoramique recouvrant partiellement la zone centrale ZC, et une caméra latérale droite CLD dont le champ de vision est adapté pour permettre l'acquisition d'une zone latérale droite ZLD de la vision panoramique recouvrant partiellement la zone centrale ZC de la vision panoramique, et l'écran 10 étant au format portrait et comprenant trois zones d'affichage, une zone d'affichage gauche ZAG, une zone d'affichage centrale ZAC et une zone d'affichage droite ZAD.

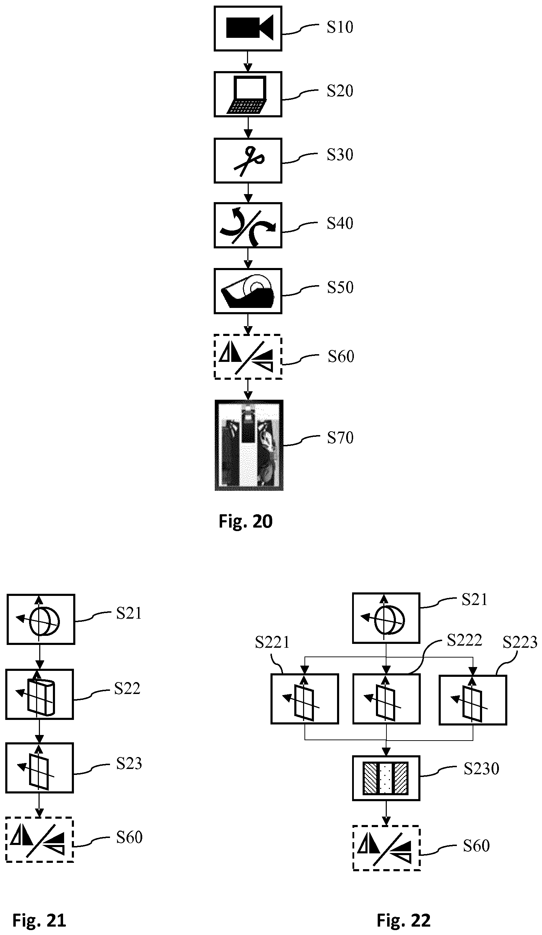

Selon un mode général de réalisation représenté sur la **Figure 20,** le procédé d'affichage comprend :

- une étape de réception S10 des images captées par les trois capteurs optiques ;
- une étape de recadrage S30 des images capteurs selon un bandeau horizontal gauche BHG pour les images issues du capteur de la caméra latérale gauche CLG, un bandeau horizontal droit BHD pour les images issues du capteur optique de la caméra latérale droite CLD et selon un bandeau vertical central BVC pour les images issues du capteur optique de la caméra centrale CC,
- une étape de rotation S40 du bandeau horizontal gauche BHG de 90° dans le sens inverse des aiguilles d'une montre et du bandeau horizontal droit BHD de 90° dans le sens des aiguilles d'une montre ;
- une étape d'agrégation S50 des trois bandeaux de sorte que la restitution de la vision panoramique sur l'écran 10 soit constituée sur la zone d'affichage gauche ZAG du bandeau horizontal gauche BHG tourné de - 90°, sur la zone d'affichage centrale ZAC du bandeau vertical central BVC et sur la zone d'affichage droite ZAD du bandeau horizontal droit BHD tourné de +90° ; et
- une étape d'affichage S70 de l'image ainsi agrégée sur l'écran 10.

Avantageusement, le procédé d'affichage comprend en outre, avant l'étape de recadrage S30, une étape de correction et de transposition S20 dans laquelle les images capteurs sont corrigées de la distorsion générée par les caméras.

Pour procéder à cette correction et transposition, deux méthodes peuvent être utilisées :

- la méthode de projection sur un cylindre ; ou
- la méthode de reconstitution en trois parties.

Ces deux méthodes ayant déjà été explicitées précédemment ainsi que les calculs associées, nous ne rappellerons ici que les étapes principales de celles-ci.

Selon la méthode de projection sur un cylindre et comme illustré sur la **Figure 21,** l'étape de correction et de transposition S20 des images capteurs comprend trois sous-étapes :

- une première sous-étape S21 de projection des pixels du capteur sur la surface interne d'une demi-sphère 70 de rayon R1 et dont le centre C et le sommet S sont situés sur un axe optique principal de la caméra, les coordonnées des pixels capteur projetés sur la demi-sphère 70 étant calculées grâce au théorème de Thalès et à l'équation de la sphère ; puis
- une seconde sous-étape S22 de projection des points P1 de la demi-sphère sur la surface interne d'un demi-cylindre 80 vertical de rayon R2 englobant la demi-sphère 70 et dont l'axe de symétrie passe par le centre C de la demi-sphère 70 ; et enfin
- une troisième sous-étape S23 de projection des points P2 du demi-cylindre 80 sur un plan tangent 90 au demi-cylindre 80 formant ainsi l'image corrigée à recadrer.

Selon la méthode de reconstitution en trois parties et comme illustré sur la **Figure 22,** l'étape de correction et de transposition S20 des images capteurs comprend cinq sous-étapes :

- une première sous-étape S21 de projection des pixels du capteur sur la surface interne d'une demi-sphère de rayon R1 et dont le centre C et le sommet S sont situés sur un axe optique principal de la caméra, les coordonnées des pixels capteur projetés sur la demi-sphère étant calculées grâce au théorème de Thalès et à l'équation de la sphère ; puis
- trois sous-étapes S221, S222 et S223 de projection où l'image projetée sur la demi-sphère est projetée sur trois rectangles, un rectangle central RC, un rectangle droit RD et un rectangle gauche RG, ces trois rectangles ayant la même orientation que le capteur et comprenant chacun un axe central vertical et un axe central horizontal, et tels que le rectangle central RC est parallèle au plan du capteur et tangent au sommet (S) de la demi-sphère, l'axe central vertical du rectangle droit RD est tangent au bord vertical droit du rectangle central RC, l'axe central vertical du rectangle gauche RG est tangent au bord vertical gauche du rectangle central RC, et l'axe central horizontal du rectangle droit RD présente un angle $\alpha$ par rapport à l'axe central horizontal du rectangle central RC, et l'axe central horizontal du rectangle gauche RG présente un angle -a par rapport à l'axe central horizontal du rectangle central RC ; et enfin
- une sous-étapes S230 d'agrégation où l'image corrigée à recadrer est obtenue en agrégeant une bande centrale verticale de l'image obtenue par projection sur le rectangle central RC, une bande droite verticale de l'image par projection obtenue sur le rectangle droit RD et une bande gauche verticale de l'image obtenue par projection sur le rectangle gauche RG.

L'étape S21 de projection sur la demi-sphère générant une inversion haut/bas (H/B) et gauche/droite (G/D) de l'image, il peut être avantageux de réaliser une étape supplémentaire S60 permettant de remettre l'image dans le sens d'origine en réalisant une inversion H/B et G/D de l'image obtenue soit avant l'étape de recadrage S30, soit avant l'étape d'affichage S70.

Ainsi, la présente invention offre de nombreux avantages comme :

- permettre au conducteur, lorsque celle-ci est intégrée à un véhicule automobile, d'avoir une visibilité sur plusieurs dizaines de mètres et donc supérieure à la vision dite « bird view » actuellement présente sur les véhicules Renault ; ou encore
- d'afficher sur un écran au format portrait une vision panoramique présentant les mêmes voire plus d'informations que celle affichée sur un écran au format paysage, et d'éviter ainsi les angles morts.

LISTE DES REFERENCES

1               Véhicule automobile

| | |
|---|---|
| 2 | Caméra |
| 3 | Second véhicule automobile |
| 4 | Cible |
| 4a, 4b, 4c, 4d | Points du rectangle représentant la cible |
| 20 | Caméra |
| 30 | Capteur |
| 40 | Objectif |
| 50 | Axe Optique |
| 60 | Rectangle / nouveau plan capteur |
| 70 | Demi-Sphère |
| 80 | Demi-Cylindre |
| 90 | Plan Tangent |
| | |
| A | Centre de la lentille équivalente |
| BV | Bird-View (vue du dessus) |
| BHD | Bandeau Horizontal Droit |
| BHV | Bandeau Horizontal Gauche |
| BVC | Bandeau Vertical Central |
| C | Centre de la demi-sphère 70 |
| CC | Caméra Centrale |
| CLD | Caméra Latérale Droite |
| CLD | Caméra Latérale Gauche |
| $C_x$ | Largeur du rectangle 60 |
| $C_y$ | Hauteur du rectangle 60 |
| d | Distance entre le rectangle 60 et le centre A de la lentille équivalente |
| D | centre du Rectangle Droit |
| G | centre du Rectangle Gauche |
| L | Lentille |
| $L_{eq}$ | Lentille équivalente |
| $P\ (x_{pu}\ ;\ y_{pu})$ | Point du rectangle 60 |
| $P_1\ (x_1\ ;\ y_1\ ;\ z_1)$ | Projection du point P sur la demi-sphère 70 |
| $P_2\ (x_2\ ;\ y_2\ ;\ z_2)$ | Projection du point P1 sur le demi-cylindre 80 |
| $P_3\ (x_3\ ;\ y_3)$ | Projection du point P2 sur le plan tangent 90 |
| $P_{RC}\ (x_{RC}\ ;\ y_{RC}\ ;\ Z_{RC})$ | Projection du point P1 sur le Rectangle Central |
| $P_{RD}\ (x_{RD}\ ;\ y_{RD}\ ;\ Z_{RD})$ | Projection du point P1 sur le Rectangle Droit |
| $P_{RG}\ (X_{RG}\ ;\ y_{RG}\ ;\ Z_{RG})$ | Projection du point P1 sur le Rectangle Gauche |
| RC | Rectangle Central |
| RD | Rectangle Droit |
| RG | Rectangle Gauche |
| $(R_{pp}\ ;\ X_{pp}\ ;\ Y_{pp}\ ;\ Z_{pp})$ | Repère orthonormé associé au plan tangent 80 |
| $(R_{pu}\ ;\ X_{pu},\ Y_{pu},\ Z_{pu})$ | Repère orthonormé associé au rectangle 60 |
| $(R_{RC}\ ;\ X_{RC},\ Y_{RC},\ Z_{RC})$ | Repère orthonormé associé au Rectangle Central |
| $(D\ ;\ X_{RD},\ Y_{RD},\ Z_{RD})$ | Repère orthonormé associé au Rectangle Droit |
| $(G\ ;\ X_{RG},\ Y_{RG},\ Z_{RG})$ | Repère orthonormé associé au Rectangle Gauche |
| $(C\ ;\ X_{sph},\ Y_{sph},\ Z_{sph})$ | Repère associé à la demi-sphère 70 |
| S | Sommet de la demi-sphère 70 |
| SVP | Système de Vision Panoramique |
| UT | Unité de Traitement d'images |
| ZAC | Zone d'Affichage Centrale |
| ZAD | Zone d'Affichage Droite |
| ZAG | Zone d'Affichage Gauche |
| ZC | Zone Centrale |
| ZLD | Zone Latérale Droite |
| ZLG | Zone Latérale Gauche |
| ZdR | Zone de Recouvrement |

**Revendications**

1.  Système de vision panoramique (SVP) comprenant :

    • trois caméras équipées chacune d'un capteur optique, une caméra centrale (CC) dont le champ de vision est adapté pour permettre l'acquisition d'une zone centrale (ZC) de la vision panoramique, une caméra latérale gauche (CLG) dont le champ de vision est adapté pour permettre l'acquisition d'une zone latérale gauche (ZLG) de la vision panoramique recouvrant partiellement la zone centrale (ZC), et une caméra latérale droite (CLD) dont le champ de vision est adapté pour permettre l'acquisition d'une zone latérale droite (ZLD) de la vision panoramique recouvrant partiellement la zone centrale (ZC) de la vision panoramique ;
    • une unité de traitement (UT) d'image apte à recevoir et traiter les images captées par les trois capteurs optiques ; et
    • un écran (10) au format portrait ;
    **caractérisé en ce que**, pour afficher la vision panoramique captée par les trois capteurs optiques et traitée par l'unité de traitement (UT),
    l'écran (10) au format portrait comprend trois zones d'affichage, une zone d'affichage gauche (ZAG), une zone d'affichage centrale (ZAC) et une zone d'affichage droite (ZAD) ;
    l'unité de traitement (UT) d'image comprend :

    - des moyens de recadrage des images capteurs selon un bandeau horizontal gauche (BHG) pour les images issues du capteur de la caméra latérale gauche (CLG), un bandeau horizontal droit (BHD) pour les images issues du capteur optique de la caméra latérale droite (CLD) et selon un bandeau vertical central (BVC) pour les images issues du capteur optique de la caméra centrale (CC), et
    - des moyens de rotation du bandeau horizontal gauche (BHG) de 90° dans le sens inverse des aiguilles d'une montre et du bandeau horizontal droit (BHD) de 90° dans le sens des aiguilles d'une montre, et
    - des moyens d'agrégation des 3 bandeaux de sorte que la restitution de la vision panoramique sur l'écran (10) soit constituée sur la zone d'affichage gauche (ZAG) du bandeau horizontal gauche (BHG) tourné de -90°, sur la zone d'affichage centrale centrale (ZAC) du bandeau vertical central (BVC) et sur la zone d'affichage droite (ZAD) du bandeau horizontal droit (BHD) tourné de +90°.

2.  Système de vision panoramique (SVP) selon la revendication 1 dans lequel l'unité de traitement (UT) comprend également des moyens de correction adaptés pour corriger la distorsion générée par les caméras et pour transposer les images corrigées obtenues de chaque capteur avant le recadrage des images capteurs.

3.  Système de vision panoramique (SVP) selon la revendication 2 dans lequel la correction et la transposition des images capteurs se fait :

    - par projection des pixels du capteur sur la surface interne d'une demi-sphère de rayon R1 et dont le centre (C) et le sommet (S) sont situés sur un axe optique principal de la caméra, les coordonnées des pixels capteur projetés sur la demi-sphère étant calculées grâce au théorème de Thalès et à l'équation de la sphère ; puis
    - par projection des points de la demi-sphère sur la surface interne d'un demi-cylindre vertical de rayon R2 englobant la demi-sphère et dont l'axe de symétrie passe par le centre (C) de la demi-sphère ; et enfin
    - par projection des points du demi-cylindre sur un plan tangent au demi-cylindre formant ainsi l'image corrigée à recadrer.

4.  Système de vision panoramique (SVP) selon la revendication 2 dans lequel la correction et la transposition des images capteurs se fait :

    - par projection des pixels du capteur sur la surface interne d'une demi-sphère de rayon R1 et dont le centre (C) et le sommet (S) sont situés sur un axe optique principal de la caméra, les coordonnées des pixels capteur projetés sur la demi-sphère étant calculées grâce au théorème de Thalès et à l'équation de la sphère ; puis
    - l'image projetée sur la demi-sphère est ensuite projetée sur trois rectangles, un rectangle central, un rectangle droit et un rectangle gauche, ces trois rectangles ayant la même orientation que le capteur et comprenant chacun un axe central vertical et un axe central horizontal, et tels que le rectangle central est parallèle au plan du capteur et situé à une distance $f_2$ du centre (C) de la demi-sphère, l'axe central vertical du rectangle droit est tangent au bord vertical droit du rectangle central, l'axe central vertical du rectangle gauche est tangent au bord vertical gauche du rectangle central, et l'axe central horizontal du rectangle droit présente un angle $\alpha$ par rapport à l'axe central horizontal du rectangle central, et l'axe central horizontal du rectangle gauche présente un angle -a par rapport à l'axe central horizontal du rectangle central,

l'image corrigée à recadrer étant obtenue en agrégeant une bande centrale verticale de l'image obtenue par projection sur le rectangle central, une bande droite verticale de l'image par projection obtenue sur le rectangle droit et une bande gauche verticale de l'image obtenue par projection sur le rectangle gauche.

5. Véhicule automobile comprenant au moins un système de vision panoramique (SVP) tel que défini selon l'une des revendications 1 à 4.

6. Véhicule automobile selon la revendication 5 dans lequel le système de vision panoramique (SVP) est adapté pour afficher sur l'écran (10) portrait une vision panoramique du champ visuel situé à l'avant du véhicule automobile.

7. Véhicule automobile selon la revendication 5 dans lequel le système de vision panoramique (SVP) est adapté pour afficher sur l'écran (10) portrait une vision panoramique du champ visuel situé derrière le véhicule automobile.

8. Véhicule automobile selon l'une des revendications 5 à 7 comprenant en outre au moins un corner radar adapté pour détecter et localiser un objet en mouvement dans une zone de détection couvrant au moins une partie d'une des zones couvertes par les caméras du système de vision panoramique (SVP), l'unité de traitement (UT) étant adaptée pour intégrer au moins une information relative à l'objet en mouvement dans la vision panoramique affichée sur l'écran (10).

9. Procédé d'affichage d'une vision panoramique sur un écran (10), la vision panoramique étant couverte par l'intermédiaire de trois caméras équipées chacune d'un capteur optique, une caméra centrale (CC) dont le champ de vision est adapté pour permettre l'acquisition d'une zone centrale (ZC) de la vision panoramique, une caméra latérale gauche (CLG) dont le champ de vision est adapté pour permettre l'acquisition d'une zone latérale gauche (ZLG) de la vision panoramique recouvrant partiellement la zone centrale (ZC), et une caméra latérale droite (CLD) dont le champ de vision est adapté pour permettre l'acquisition d'une zone latérale droite (ZLD) de la vision panoramique recouvrant partiellement la zone centrale (ZC) de la vision panoramique, et l'écran (10) étant au format portrait et comprenant trois zones d'affichage, une zone d'affichage gauche (ZAG), une zone d'affichage centrale centrale (ZAC) et une zone d'affichage droite (ZAD), le procédé comprenant :

   • une étape de réception (S10) des images captées par les trois capteurs optiques ;
   • une étape de recadrage (S30) des images capteurs selon un bandeau horizontal gauche (BHG) pour les images issues du capteur de la caméra latérale gauche (CLG), un bandeau horizontal droit (BHD) pour les images issues du capteur optique de la caméra latérale droite (CLD) et selon un bandeau vertical central (BVC) pour les images issues du capteur optique de la caméra centrale (CC),
   • une étape de rotation (S40) du bandeau horizontal gauche (BHG) de 90° dans le sens inverse des aiguilles d'une montre et du bandeau horizontal droit (BHD) de 90° dans le sens des aiguilles d'une montre ;
   • une étape d'agrégation (S50) des trois bandeaux de sorte que la restitution de la vision panoramique sur l'écran (10) soit constituée sur la zone d'affichage gauche (ZAG) du bandeau horizontal gauche (BHG) tourné de -90°, sur la zone d'affichage centrale centrale (ZAC) du bandeau vertical central (BVC) et sur la zone d'affichage droite (ZAD) du bandeau horizontal droit (BHD) tourné de +90° ; et
   • une étape d'affichage (S70) de l'image ainsi agrégée sur l'écran (10).

10. Procédé d'affichage selon la revendication 9 comprenant en outre, avant l'étape de recadrage, une étape de correction et de transposition dans laquelle les images capteurs sont corrigées de la distorsion générée par les caméras.

11. Procédé d'affichage selon la revendication 10 dans lequel la correction et la transposition des images capteurs se font :

   - par projection des pixels du capteur sur la surface interne d'une demi-sphère de rayon R1 et dont le centre (C) et le sommet (S) sont situés sur un axe optique principal de la caméra, les coordonnées des pixels capteur projetés sur la demi-sphère étant calculées grâce au théorème de Thalès et à l'équation de la sphère ; puis
   - par projection des points de la demi-sphère sur la surface interne d'un demi-cylindre vertical de rayon R2 englobant la demi-sphère et dont l'axe de symétrie passe par le centre (C) de la demi-sphère ; et enfin
   - par projection des points du demi-cylindre sur un plan tangent au demi-cylindre formant ainsi l'image corrigée à recadrer.

**12.** Procédé d'affichage selon la revendication 10 dans lequel la correction et la transposition des images capteurs se font :

- par projection des pixels du capteur sur la surface interne d'une demi-sphère de rayon R1 et dont le centre (C) et le sommet (S) sont situés sur un axe optique principal de la caméra, les coordonnées des pixels capteur projetés sur la demi-sphère étant calculées grâce au théorème de Thalès et à l'équation de la sphère ; puis
- l'image projetée sur la demi-sphère est ensuite projetée sur trois rectangles, un rectangle central, un rectangle droit et un rectangle gauche, ces trois rectangles ayant la même orientation que le capteur et comprenant chacun un axe central vertical et un axe central horizontal, et tels que le rectangle central est parallèle au plan du capteur et tangent au sommet (S) de la demi-sphère, l'axe central vertical du rectangle droit est tangent au bord vertical droit du rectangle central, l'axe central vertical du rectangle gauche est tangent au bord vertical gauche du rectangle central, et l'axe central horizontal du rectangle droit présente un angle α par rapport à l'axe central horizontal du rectangle central, et l'axe central horizontal du rectangle gauche présente un angle -a par rapport à l'axe central horizontal du rectangle central,

l'image corrigée à recadrer étant obtenue en agrégeant une bande centrale verticale de l'image obtenue par projection sur le rectangle central, une bande droite verticale de l'image par projection obtenue sur le rectangle droit et une bande gauche verticale de l'image obtenue par projection sur le rectangle gauche.

**13.** Produit programme d'ordinateur téléchargeable depuis un réseau de communication et/ou enregistré sur un support lisible par ordinateur et/ou exécutable par une unité de traitement (UT), **caractérisé en ce qu'**il comprend des instructions pour la mise en œuvre du procédé d'affichage selon l'une au moins des revendications 9 à 12.

**Patentansprüche**

**1.** Rundumsichtsystem (SVP), das enthält:

• drei je mit einem optischen Sensor ausgestattete Kameras, eine zentrale Kamera (CC), deren Sichtfeld geeignet ist, die Erfassung einer zentralen Zone (ZC) der Rundumsicht zu erlauben, eine linke seitliche Kamera (CLG), deren Sichtfeld geeignet ist, die Erfassung einer linken seitlichen Zone (ZLG) der Rundumsicht zu erlauben, die teilweise die zentrale Zone (ZC) überdeckt, und eine rechte seitliche Kamera (CLD), deren Sichtfeld geeignet ist, die Erfassung einer rechten seitlichen Zone (ZLD) der Rundumsicht zu erlauben, die teilweise die zentrale Zone (ZC) der Rundumsicht überdeckt;
• eine Bildverarbeitungseinheit (UT), die fähig ist, die von den drei optischen Sensoren aufgenommenen Bilder zu empfangen und zu verarbeiten; und
• einen Bildschirm (10) im Hochformat;
**dadurch gekennzeichnet, dass**, zur Anzeige der von den drei optischen Sensoren aufgenommenen und von der Verarbeitungseinheit (UT) verarbeiteten Rundumsicht,
der Bildschirm (10) im Hochformat drei Anzeigezonen enthält, eine linke Anzeigezone (ZAG), eine zentrale Anzeigezone (ZAC) und eine rechte Anzeigezone (ZAD);
die Bildverarbeitungseinheit (UT) enthält:

- Zuschneideeinrichtungen der Sensorbilder gemäß einem linken waagrechten Streifen (BHG) für die vom Sensor der linken seitlichen Kamera (CLG) stammenden Bilder, einem rechten waagrechten Streifen (BHD) für die vom optischen Sensor der rechten seitlichen Kamera (CLD) stammenden Bilder und gemäß einem zentralen senkrechten Streifen (BVC) für die vom optischen Sensor der zentralen Kamera (CC) stammenden Bilder, und
- Dreheinrichtungen des linken waagrechten Streifens (BHG) um 90° in Gegenuhrzeigerrichtung und des rechten waagrechten Streifens (BHD) um 90° in Uhrzeigerrichtung, und
- Aggregationseinrichtungen der 3 Streifen, so dass die Wiedergabe der Rundumsicht auf dem Bildschirm (10) auf der linken Anzeigezone (ZAG) aus dem linken waagrechten Streifen (BHG) um -90° gedreht, auf der zentralen Anzeigezone (ZAC) aus dem zentralen senkrechten Streifen (BVC) und auf der rechten Anzeigezone (ZAD) aus dem rechten waagrechten Streifen (BHD) um +90° gedreht besteht.

**2.** Rundumsichtsystem (SVP) nach Anspruch 1, wobei die Verarbeitungseinheit (UT) ebenfalls Korrektureinrichtungen enthält, die geeignet sind, die von den Kameras erzeugte Verzerrung zu korrigieren und die von jedem Sensor erhaltenen korrigierten Bilder vor dem Zuschneiden der Sensorbilder zu transponieren.

3. Rundumsichtsystem (SVP) nach Anspruch 2, wobei die Korrektur und die Transposition der Sensorbilder erfolgt:

- durch Projektion der Pixel des Sensors auf die Innenfläche einer Halbkugel mit einem Radius R1 und deren Mitte (C) und Scheitel (S) sich auf einer optischen Hauptachse der Kamera befinden, wobei die Koordinaten der auf die Halbkugel projizierten Sensorpixel mittels des Satzes des Thales und der Gleichung der Kugel berechnet werden; dann
- durch Projektion der Punkte der Halbkugel auf die Innenfläche eines senkrechten Halbzylinders mit einem Radius R2, der die Halbkugel enthält und dessen Symmetrieachse durch die Mitte (C) der Halbkugel geht; und schließlich
- durch Projektion der Punkte des Halbzylinders auf eine den Halbzylinder tangierende Ebene, wodurch das zuzuschneidende korrigierte Bild geformt wird.

4. Rundumsichtsystem (SVP) nach Anspruch 2, wobei die Korrektur und die Übertragung der Sensorbilder erfolgt:

- durch Projektion der Pixel des Sensors auf die Innenfläche einer Halbkugel mit einem Radius R1 und deren Mitte (C) und Scheitel (S) sich auf einer optischen Hauptachse der Kamera befinden, wobei die Koordinaten der auf die Halbkugel projizierten Sensorpixel mittels des Satzes des Thales und der Gleichung der Kugel berechnet werden; dann
- wird das auf die Halbkugel projizierte Bild anschließend auf drei Rechtecke projiziert, ein zentrales Rechteck, ein rechtes Rechteck und ein linkes Rechteck, wobei diese drei Rechtecke die gleiche Ausrichtung haben wie der Sensor und je eine senkrechte zentrale Achse und eine waagrechte zentrale Achse enthalten, und derart sind, dass das zentrale Rechteck parallel zur Ebene des Sensors ist und sich in einem Abstand $f_2$ von der Mitte (C) der Halbkugel befindet, die senkrechte zentrale Achse des rechten Rechtecks den rechten senkrechten Rand des zentralen Rechtecks tangiert, die senkrechte zentrale Achse des linken Rechtecks den linken senkrechten Rand des zentralen Rechtecks tangiert, und die waagrechte zentrale Achse des rechten Rechtecks einen Winkel $\alpha$ bezüglich der waagrechten zentralen Achse des zentralen Rechtecks aufweist, und die waagrechte zentrale Achse des linken Rechtecks einen Winkel $-\alpha$ bezüglich der waagrechten zentralen Achse des zentralen Rechtecks aufweist,

wobei das zuzuschneidende korrigierte Bild durch Aggregieren eines senkrechten zentralen Streifens des durch Projektion auf das zentrale Rechteck erhaltenen Bilds, eines senkrechten rechten Streifens des durch Projektion auf das rechte Rechteck erhaltenen Bilds und eines senkrechten linken Streifens des durch Projektion auf das linke Rechteck erhaltenen Bilds erhalten wird.

5. Kraftfahrzeug, das mindestens ein wie in einem der Ansprüche 1 bis 4 definiertes Rundumsichtsystem (SVP) enthält.

6. Kraftfahrzeug nach Anspruch 5, wobei das Rundumsichtsystem (SVP) geeignet ist, auf dem Hochformat-Bildschirm (10) eine Rundumsicht des vor dem Kraftfahrzeug befindlichen Sichtfelds anzuzeigen.

7. Kraftfahrzeug nach Anspruch 5, wobei das Rundumsichtsystem (SVP) geeignet ist, auf dem Hochformat-Bildschirm (10) eine Rundumsicht des hinter dem Kraftfahrzeug befindlichen Sichtfelds anzuzeigen.

8. Kraftfahrzeug nach einem der Ansprüche 5 bis 7, das außerdem mindestens ein Corner-Radar enthält, das geeignet ist, ein in einer Erfassungszone, die mindestens einen Teil einer der von den Kameras des Rundumsichtsystems (SVP) abgedeckten Zonen abdeckt, in Bewegung befindliches Objekt zu erfassen und zu lokalisieren, wobei die Verarbeitungseinheit (UT) geeignet ist, mindestens eine Information bezüglich des in Bewegung befindlichen Objekts in die auf dem Bildschirm (10) angezeigte Rundumsicht zu integrieren.

9. Verfahren zur Anzeige einer Rundumsicht auf einem Bildschirm (10), wobei die Rundumsicht mittels dreier Kameras abgedeckt wird, die je mit einem optischen Sensor ausgestattet sind, einer zentralen Kamera (CC), deren Sichtfeld geeignet ist, die Erfassung einer zentralen Zone (ZC) der Rundumsicht zu erlauben, einer linken seitlichen Kamera (CLG), deren Sichtfeld geeignet ist, die Erfassung einer linken seitlichen Zone (ZLG) der Rundumsicht zu erlauben, die teilweise die zentrale Zone (ZC) überdeckt, und einer rechten seitlichen Kamera (CLD), deren Sichtfeld geeignet ist, die Erfassung einer rechten seitlichen Zone (ZLD) der Rundumsicht zu erlauben, die teilweise die zentrale Zone (ZC) der Rundumsicht überdeckt, und wobei der Bildschirm (10) im Hochformat ist und drei Anzeigezonen enthält, eine linke Anzeigezone (ZAG), eine zentrale Anzeigezone (ZAC) und eine rechte Anzeigezone (ZAD), wobei das Verfahren enthält:

• einen Schritt des Empfangs (S10) der von den drei optischen Sensoren aufgenommenen Bilder;
• einen Schritt des Zuschneidens (S30) der Sensorbilder gemäß einem linken waagrechten Streifen (BHG) für die vom Sensor der linken seitlichen Kamera (CLG) stammenden Bilder, einem rechten waagrechten Streifen (BHD) für die vom optischen Sensor der rechten seitlichen Kamera (CLD) stammenden Bilder und gemäß einem zentralen senkrechten Streifen (BVC) für die vom optischen Sensor der zentralen Kamera (CC) stammenden Bilder,
• einen Schritt der Drehung (S40) des linken waagrechten Streifens (BHG) um 90° in Gegenuhrzeigerrichtung und des rechten waagrechten Streifens (BHD) um 90° in Uhrzeigerrichtung;
• einen Schritt der Aggregation (S50) der drei Streifen, so dass die Wiedergabe der Rundumsicht auf dem Bildschirm (10) auf der linken Anzeigezone (ZAG) aus dem linken waagrechten Streifen (BHG) um -90° gedreht, auf der zentralen Anzeigezone (ZAC) aus dem zentralen senkrechten Streifen (BVC) und auf der rechten Anzeigezone (ZAD) aus dem rechten waagrechten Streifen (BHD) um +90° gedreht besteht; und
• einen Schritt der Anzeige (S70) des so aggregierten Bilds auf dem Bildschirm (10).

10. Anzeigeverfahren nach Anspruch 9, das außerdem vor dem Schritt des Zuschneidens einen Schritt der Korrektur und der Transposition enthält, in dem die von den Kameras erzeugte Verzerrung der Sensorbilder korrigiert wird.

11. Anzeigeverfahren nach Anspruch 10, wobei die Korrektur und die Transposition der Sensorbilder erfolgen:

   - durch Projektion der Pixel des Sensors auf die Innenfläche einer Halbkugel mit einem Radius R1 und deren Mitte (C) und Scheitel (S) sich auf einer optischen Hauptachse der Kamera befinden, wobei die Koordinaten der auf die Halbkugel projizierten Sensorpixel mittels des Satzes des Thales und der Gleichung der Kugel berechnet werden; dann
   - durch Projektion der Punkte der Halbkugel auf die Innenfläche eines senkrechten Halbzylinders mit einem Radius R2, der die Halbkugel enthält und dessen Symmetrieachse durch die Mitte (C) der Halbkugel geht; und schließlich
   - durch Projektion der Punkte des Halbzylinders auf eine den Halbzylinder tangierende Ebene, wodurch das zuzuschneidende korrigierte Bild geformt wird.

12. Anzeigeverfahren nach Anspruch 10, wobei die Korrektur und die Transposition der Sensorbilder erfolgen:

   - durch Projektion der Pixel des Sensors auf die Innenfläche einer Halbkugel mit einem Radius R1 und deren Mitte (C) und Scheitel (S) sich auf einer optischen Hauptachse der Kamera befinden, wobei die Koordinaten der auf die Halbkugel projizierten Sensorpixel mittels des Satzes des Thales und der Gleichung der Kugel berechnet werden; dann
   - das auf die Halbkugel projizierte Bild anschließend auf drei Rechtecke projiziert wird, ein zentrales Rechteck, ein rechtes Rechteck und ein linkes Rechteck, wobei diese drei Rechtecke die gleiche Ausrichtung haben wie der Sensor und je eine senkrechte zentrale Achse und eine waagrechte zentrale Achse enthalten, und derart sind, dass das zentrale Rechteck parallel zur Ebene des Sensors ist und den Scheitel (S) der Halbkugel tangiert, die senkrechte zentrale Achse des rechten Rechtecks den rechten senkrechten Rand des zentralen Rechtecks tangiert, die senkrechte zentrale Achse des linken Rechtecks den linken senkrechten Rand des zentralen Rechtecks tangiert, und die waagrechte zentrale Achse des rechten Rechtecks einen Winkel $\alpha$ bezüglich der waagrechten zentralen Achse des zentralen Rechtecks aufweist, und die waagrechte zentrale Achse des linken Rechtecks einen Winkel -$\alpha$ bezüglich der waagrechten zentralen Achse des zentralen Rechtecks aufweist,

   wobei das zuzuschneidende korrigierte Bild durch Aggregieren eines senkrechten zentralen Streifens des durch Projektion auf das zentrale Rechteck erhaltenen Bilds, eines senkrechten rechten Streifens des durch Projektion auf das rechte Rechteck erhaltenen Bilds und eines senkrechten linken Streifens des durch Projektion auf das linke Rechteck erhaltenen Bilds erhalten wird.

13. Computerprogrammprodukt, das von einem Kommunikationsnetz heruntergeladen werden kann und/oder auf einem computerlesbaren Träger gespeichert ist und/oder von einer Verarbeitungseinheit (UT) ausgeführt werden kann, **dadurch gekennzeichnet, dass** es Anweisungen zur Durchführung des Anzeigeverfahrens nach mindestens einem der Ansprüche 9 bis 12 enthält.

**Claims**

1. Panoramic-vision system (SVP) comprising:

• three cameras each equipped with one optical sensor, namely a central camera (CC), the field of view of which is configured to allow a central region (ZC) of the panoramic vision to be acquired, a left side camera (CLG), the field of view of which is configured to allow a left side region (ZLG) of the panoramic vision partially covering the central region (ZC) to be acquired, and a right side camera (CLD), the field of view of which is configured to allow a right side region (ZLD) of the panoramic vision partially covering the central region (ZC) of the panoramic vision to be acquired;
• an image-processing unit (UT) able to receive and process the images captured by the three optical sensors; and
• a screen (10) in portrait format;
**characterized in that**, to display the panoramic vision captured by the three optical sensors and processed by the processing unit (UT),
the screen (10) in portrait format comprises three display regions, a left display region (ZAG), a central display region (ZAC) and a right display region (ZAD); the image-processing unit (UT) comprises:

- means for cropping the sensor images to form a left horizontal strip (BHG) from the images generated by the sensor of the left side camera (CLG), a right horizontal strip (BHD) from the images generated by the optical sensor of the right side camera (CLD), and a central vertical strip (BVC) from the images generated by the optical sensor of the central camera (CC), and
- means for rotating the left horizontal strip (BHG) by 90° in the counter-clockwise direction and the right horizontal strip (BHD) by 90° in the clockwise direction, and
- means for aggregating the 3 strips so that the restitution of the panoramic vision on the screen (10) consists, in the left display region (ZAG), of the left horizontal strip (BHG) rotated by -90°, in the central display region (ZAC), of the central vertical strip (BVC), and, in the right display region (ZAD), of the right horizontal strip (BHD) rotated by +90°.

2. Panoramic-vision system (SVP) according to Claim 1, wherein the processing unit (UT) also comprises correcting means configured to correct for the distortion generated by the cameras and to transpose the obtained corrected images of each sensor before the sensor images are cropped.

3. Panoramic-vision system (SVP) according to Claim 2, wherein the correction and transposition of the sensor images is achieved:

- by projecting the pixels of the sensor onto the internal surface of a hemisphere of radius R1 and the centre (C) and the apex (S) of which are located on a main optical axis of the camera, the coordinates of the sensor pixels projected onto the hemisphere being computed using Thales's theorem and the equation of the sphere; then
- by projecting the points of the hemisphere onto the internal surface of a vertical semi-cylinder of radius R2 encompassing the hemisphere and the axis of symmetry of which passes through the centre (C) of the hemisphere; and lastly
- by projecting the points of the semi-cylinder onto a plane tangent to the semi-cylinder so as to thus form the corrected image to be cropped.

4. Panoramic-vision system (SVP) according to Claim 2, wherein the correction and transposition of the sensor images is achieved:

- by projecting the pixels of the sensor onto the internal surface of a hemisphere of radius R1 and the centre (C) and the apex (S) of which are located on a main optical axis of the camera, the coordinates of the sensor pixels projected onto the hemisphere being computed using Thales's theorem and the equation of the sphere; then
- the image projected onto the hemisphere is then projected onto three rectangles, namely a central rectangle, a right rectangle and a left rectangle, these three rectangles having the same orientation as the sensor and each comprising a vertical central axis and a horizontal central axis, these rectangles being such that the central rectangle lies parallel to the plane of the sensor and is located at a distance $f_2$ from the centre (C) of the hemisphere, the vertical central axis of the right rectangle is tangent to the right vertical edge of the central rectangle, the vertical central axis of the left rectangle is tangent to the left vertical edge of the central rectangle,

EP 3 768 555 B1

and the horizontal central axis of the right rectangle makes an angle α to the horizontal central axis of the central rectangle, and the horizontal central axis of the left rectangle makes an angle -a to the horizontal central axis of the central rectangle,

the corrected image to be cropped being obtained by aggregating a vertical central strip of the image obtained by projection onto the central rectangle, a vertical right strip of the image obtained by projection onto the right rectangle and a vertical left strip of the image obtained by projection onto the left rectangle.

5. Motor vehicle comprising at least one panoramic-vision system (SVP) such as defined in one of Claims 1 to 4.

6. Motor vehicle according to Claim 5, wherein the panoramic-vision system (SVP) is configured to display, on the portrait screen (10), a panoramic vision of the visual field located in front of the motor vehicle.

7. Motor vehicle according to Claim 5, wherein the panoramic-vision system (SVP) is configured to display, on the portrait screen (10), a panoramic vision of the visual field located behind the motor vehicle.

8. Motor-vehicle according to one of Claims 5 to 7, furthermore comprising at least one corner radar configured to detect and locate a moving object in a detection region at least partially covering one of the regions covered by the cameras of the panoramic-vision system (SVP), the processing unit (UT) being configured to integrate at least one information item relative to the moving object into the panoramic vision displayed on the screen (10).

9. Method for displaying a panoramic vision on a screen (10), the panoramic vision being covered by way of three cameras each equipped with one optical sensor, namely a central camera (CC), the field of view of which is configured to allow a central region (ZC) of the panoramic vision to be acquired, a left side camera (CLG), the field of view of which is configured to allow a left side region (ZLG) of the panoramic vision partially covering the central region (ZC) to be acquired, and a right side camera (CLD), the field of view of which is configured to allow a right side region (ZLD) of the panoramic vision partially covering the central region (ZC) of the panoramic vision to be acquired, and the screen (10) being in portrait format and comprising three display regions, a left display region (ZAG), a central display region (ZAC) and a right display region (ZAD), the method comprising:

• a step (S10) of receiving the images captured by the three optical sensors;
• a step (S30) of cropping the sensor images to form a left horizontal strip (BHG) from the images generated by the sensor of the left side camera (CLG), a right horizontal strip (BHD) from the images generated by the optical sensor of the right side camera (CLD), and a central vertical strip (BVC) from the images generated by the optical sensor of the central camera (CC);
- a step (S40) of rotating the left horizontal strip (BHG) by 90° in the counter-clockwise direction and the right horizontal strip (BHD) by 90° in the clockwise direction;
- a step (S50) of aggregating the three strips so that the restitution of the panoramic vision on the screen (10) consists, in the left display region (ZAG), of the left horizontal strip (BHG) rotated by -90°, in the central display region (ZAC), of the central vertical strip (BVC), and, in the right display region (ZAD), of the right horizontal strip (BHD) rotated by +90°; and
- a step (S70) of displaying the image thus aggregated on the screen (10).

10. Displaying method according to Claim 9, further comprising, before the cropping step, a correcting and transposing step in which the sensor images are corrected for the distortion generated by the cameras.

11. Displaying method according to Claim 10, wherein the correction and transposition of the sensor images is achieved:

- by projecting the pixels of the sensor onto the internal surface of a hemisphere of radius R1 and the centre (C) and the apex (S) of which are located on a main optical axis of the camera, the coordinates of the sensor pixels projected onto the hemisphere being computed using Thales's theorem and the equation of the sphere; then
- by projecting the points of the hemisphere onto the internal surface of a vertical semi-cylinder of radius R2 encompassing the hemisphere and the axis of symmetry of which passes through the centre (C) of the hemisphere; and lastly
- by projecting the points of the semi-cylinder onto a plane tangent to the semi-cylinder so as to thus form the corrected image to be cropped.

12. Displaying method according to Claim 10, wherein the correction and transposition of the sensor images is achieved:

- by projecting the pixels of the sensor onto the internal surface of a hemisphere of radius R1 and the centre (C) and the apex (S) of which are located on a main optical axis of the camera, the coordinates of the sensor pixels projected onto the hemisphere being computed using Thales's theorem and the equation of the sphere; then
- the image projected onto the hemisphere is then projected onto three rectangles, namely a central rectangle, a right rectangle and a left rectangle, these three rectangles having the same orientation as the sensor and each comprising a vertical central axis and a horizontal central axis, these rectangles being such that the central rectangle lies parallel to the plane of the sensor and is tangent to the apex (S) of the hemisphere, the vertical central axis of the right rectangle is tangent to the right vertical edge of the central rectangle, the vertical central axis of the left rectangle is tangent to the left vertical edge of the central rectangle, and the horizontal central axis of the right rectangle makes an angle $\alpha$ to the horizontal central axis of the central rectangle, and the horizontal central axis of the left rectangle makes an angle -a to the horizontal central axis of the central rectangle, the corrected image to be cropped being obtained by aggregating a vertical central strip of the image obtained by projection onto the central rectangle, a vertical right strip of the image obtained by projection onto the right rectangle and a vertical left strip of the image obtained by projection onto the left rectangle.

13. Computer program product downloadable from a communication network and/or stored on a medium that is computer-readable and/or executable by a processing unit (UT), **characterized in that** it comprises instructions for implementing the displaying method according to at least one of Claims 9 to 12.

**Fig. 1**

**Fig. 2a**

**Fig. 2b**

**Fig. 3**

**Fig. 4**

**Fig. 5**

**Fig. 6**

ZLG      ZC      ZLD

BHG      BVC      BHD

10

ZAG     ZAC     ZAD

Fig. 7

**Fig. 8**

**Fig. 9**

**Fig. 10**

ZLG ZC ZLD

Im1 Im2 Im3 Im1 Im2 Im3

BHG BVC BHD

10

ZAG ZAC ZAD

**Fig. 11**

**Fig. 12**

**Fig. 13**

**Fig. 14**

**Fig. 15**

**Fig. 16**

**Fig. 17**

BV

ZAC

1

10

ZAG          ZAD

**Fig. 18**

75

100     180

1024

800          10

600

100

1024

800

**Fig. 19a**          **Fig. 19b**

S10

S20

S30

S40

S50

S60

S70

**Fig. 20**

S21

S22

S23

S60

**Fig. 21**

S21

S221    S222    S223

S230

S60

**Fig. 22**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011166782 A
- US 2015138356 A
- WO 2017144826 A1